# EUROPÄISCHE PATENTSCHRIFT

(11) **EP 2 867 076 B1**
(45) Veröffentlichungstag und Bekanntmachung des Hinweises auf die Patenterteilung: **07.11.2018**
(21) Anmeldenummer: 13719872.7
(22) Anmeldetag: 03.05.2013
(51) Int. Cl.: B60T 1/10, B60T 7/04, B60T 8/171, B60T 8/172, B60T 8/44, B60T 13/66, B60T 13/68, B60T 13/74, B60T 17/22, B60W 10/08, B60W 10/184, B60W 30/18, B60W 30/19

(54) **VERFAHREN ZUM BETREIBEN EINES REKUPERATIVEN BREMSSYSTEMS EINES FAHRZEUGS UND REKUPERATIVES BREMSSYSTEM**
METHOD FOR OPERATING A RECUPERATIVE BRAKE SYSTEM OF A VEHICLE AND RECUPERATIVE BRAKE SYSTEM
PROCÉDÉ POUR FAIRE FONCTIONNER UN SYSTÈME DE FREINAGE À RÉCUPÉRATION D'UN VÉHICULE ET SYSTÈME DE FREINAGE À RÉCUPÉRATION

(30) Priorität: 29.06.2012 DE 102012211278
(43) Veröffentlichungstag der Anmeldung: 06.05.2015
(73) Patentinhaber: Robert Bosch GmbH, 70442 Stuttgart (DE)
(72) Erfinder: VOLLERT, Herbert, 71665 Vaihingen/Enz (DE); STRENGERT, Stefan, 70469 Stuttgart (DE); KUNZ, Michael, 71711 Steinheim An Der Murr (DE); KOLARSKY, Jens, 74321 Bietigheim/Bissingen (DE)
(86) Internationale Anmeldenummer: PCT/EP2013/059222
(87) Internationale Veröffentlichungsnummer: WO 2014/000928

(56) Entgegenhaltungen:
- WO-A1-2010/006996
- WO-A1-2010/069679
- WO-A1-2011/020691
- DE-A1-102009 002 359
- DE-A1-102009 005 937
- DE-A1-102010 002 272
- DE-A1-102010 002 406
- DE-A1-102010 040 854
- DE-A1-102011 083 305
- US-A1- 2009 045 672
- US-A1- 2011 066 345

## Beschreibung

Die Erfindung betrifft ein Verfahren zum Betreiben eines rekuperativen Bremssystems eines Fahrzeugs. Ebenso betrifft die Erfindung eine Steuervorrichtung für ein rekuperatives Bremssystem eines Fahrzeugs. Des Weiteren betrifft die Erfindung ein rekuperatives Bremssystem für ein Fahrzeug.

### Stand der Technik

In der DE 196 04 134 A1 sind ein Verfahren und eine Vorrichtung zur Steuerung einer Bremsanlage eines Kraftfahrzeugs mit einem elektrischen Antrieb beschrieben. Bei einem Abbremsen des Fahrzeugs unter Einsatz des elektrischen Antriebs zum gleichzeitigen Aufladen einer Batterie soll das von dem mindestens einen Radbremszylinder der hydraulischen Bremsanlage auf mindestens ein Rad ausgeübte hydraulische Bremsmoment trotz einer Betätigung des Bremspedals reduziert/deaktiviert werden. Dazu soll dem durch die Betätigung des Bremspedals aus dem Hauptbremszylinder zu den Radbremsen verschobenen Druckmittel entgegengewirkt werden, indem durch Öffnen der Radauslassventile der hydraulischen Bremsanlage das aus dem Hauptbremszylinder verschobene Druckmittel über den mindestens einen Radbremszylinder in mindestens eine Speicherkammer überführt wird. Auf diese Weise soll eine von dem elektrischen Antrieb ausgeführte regenerative Abbremsung verblendbar sein.

Die DE 10 2009 002 359 A1 offenbart ein weiteres derartiges Betriebsverfahren für ein bremskraftverstärkten Bremssystem.

### Offenbarung der Erfindung

Die Erfindung schafft ein Verfahren zum Betreiben eines rekuperativen Bremssystems eines Fahrzeugs mit den Merkmalen des Anspruchs 1, und ein rekuperatives Bremssystem für ein Fahrzeug mit den Merkmalen des Anspruchs 7.

### Vorteile der Erfindung

Die vorliegende Erfindung ermöglicht ein Bremssystem, welches während einer Bremsung sowohl eine Kraftverblendung als auch eine Volumenverblendung ausführen kann. Mittels des Begriffs "Kraftverblendung" ist ein Vorgang umschreibbar, durch welchen der Fahrer während der Betätigung des Bremsbetätigungselements, wie beispielsweise des Bremspedals, insbesondere bei einem rein regenerativen Bremsen (d. h. einem Bremsen mit einem hydraulischen Bremsmoment des mindestens einen Radbremszylinders gleich Null) nicht spürt, dass kein Bremsdruck in dem Hauptbremszylinder vorliegt und deshalb keine Hauptbremszylinder-Gegenkraft/Hauptbremszylinder-Rückwirkungskraft auf das Bremsbetätigungselement ausgeübt wird. Somit hat der Fahrer auch während eines rein generativen Bremsens das standardgemäße Pedalgefühl. Auch bei einem Wechsel von einem rein regenerativen Bremsen zu einem rein hydraulischen Bremsen bleibt das standardgemäße Bremsbetätigungsgefühl für den Fahrer wahrnehmbar, obwohl der Hauptbremszylinderdruck und damit die Hauptbremszylinder-Gegenkraft/Hauptbremszylinder-Rückwirkungskraft (signifikant) ansteigt. Das mittels der vorliegenden Erfindung realisierbare Bremssystem ist jedoch in der Lage, eine auf das Bremsbetätigungselement ausgeübte Summe aus der Hauptbremszylinder-Gegenkraft/Hauptbremszylinder-Rückwirkungskraft und der Verstärkungskraft des Bremskraftverstärkers unabhängig von einem Betriebsfall des Bremssystems (nahezu) konstant und vergleichbar zu einem Bremsbetätigungsgefühl eines konventionellen Bremssystems zu erhalten.

Mit dem Begriff "Volumenverblendung" ist ein Vorgang bezeichenbar, durch welchen das durch eine Betätigung des Bremsbetätigungselements des Fahrers verschobene Bremsflüssigkeitsvolumen nicht in den mindestens einen Radbremszylinder (Radbremszange) befördert, sondern in dem mindestens einen Speichervolumen gespeichert wird. Auf diese Weise ist ein Aufbau/eine Steigerung des hydraulischen Bremsmoments des mindestens einen Radbremszylinders trotz der Betätigung des Bremsbetätigungselements durch den Fahrer verhinderbar. Somit kann das von dem Fahrer mittels der Betätigung des Bremsbetätigungselements angeforderte Soll-Bremsmoment (insbesondere vollständig) zum Aktivieren des Generators genutzt werden, ohne dass das Fahrzeug gegenüber dem Fahrerbremswunsch zu stark abgebremst wird. Mittels der Volumenverblendung können somit der Energieverbrauch und die Schadstoffemission des Fahrzeugs reduziert werden. Nimmt das Generator-Bremsmoment während einer Bremsung ab, beispielsweise aufgrund einer vollständigen Aufladung einer Fahrzeugbatterie und/oder einer aktuellen Fahrzeuggeschwindigkeit unter einer Generator-Einsetz-Mindestgeschwindigkeit, kann mittels der Volumenverblendung eine Rückförderung des in das mindestens eine Speichervolumen verschobenen Bremsflüssigkeitsvolumens in die Radbremszylinder/Radbremszangen ausgeführt werden. Auf diese Weise ist das hydraulische Bremsmoment des mindestens einen Radbremszylinders so aufbaubar/steigerbar, dass trotz einer zeitlichen Abnahme des Generator-Bremsmoments das von dem Fahrer vorgegebene Soll-Bremsmoment des Fahrzeugs verlässlich einhaltbar ist.

Die vorliegende Erfindung zeichnet sich durch eine kosteneffiziente Erweiterung eines Einfachsystems aus. Das mittels der vorliegenden Erfindung realisierbare Bremssystem weist eine vorteilhaft hohe regenerative Effizienz auf und bietet einen guten Bremskomfort für den Fahrer trotz des gleichzeitig ausgeführten Verblendens des zeitlich variierenden Generator-Bremsmoments.

Die mittels der vorliegenden Erfindung realisierte Steigerung der regenerativen Effizienz ist auch darin begründet, dass das mittels der vorliegenden Erfindung realisierte Bremssystem den Fahrer bei der Modulationsaufgabe im Falle eines Aussetzens des entfallenden regenerativen Bremsmoments unterstützt. Die nach dem Stand der Technik übliche Begrenzung des regenerativen Bremsmoments auf ein mittels des Fahrers selbstverblendbares maximales Bremsmoment entfällt somit.

Außerdem ist das mittels der vorliegenden Erfindung bewirkbare vorteilhafte Verblenden des Generator-Bremsmoments nicht auf einen Jump-in-Bereich des Bremskraftverstärkers begrenzt. Damit ist eine deutliche Funktionserweiterung und Steigerung der regenerativen Effizienz verbunden.

Das mittels der vorliegenden Erfindung realisierbare Bremssystem ist nicht auf eine Verwendung eines als Vakuum-Bremskraftverstärker ausgebildeten Bremskraftverstärkers limitiert. Das realisierbare Bremssystem ist somit nicht mehr auf eine Versorgung mit Vakuum angewiesen. Somit kann das Bremssystem vorteilhaft auch in einem Elektro- und Hybridfahrzeug eingesetzt werden, welches entweder keinen Verbrennungsmotor aufweist oder einen zumindest zeitweise deaktivierten Verbrennungsmotor verwendet. Durch den Entfall einer Versorgung des Bremskraftverstärkers mit Vakuum ist das realisierte Bremssystem nicht mehr auf das Vorhandensein oder auf ein häufiges Betreiben eines Verbrennungsmotors angewiesen.

Die Erfindung realisiert ein Bremssystem, das eine vorteilhafte Kombination aus einem (elektromechanischen) Bremskraftverstärker und einen ESP-System darstellt. Es beseitigt den Nachteil einer begrenzten rekuperativen Effizienz standardgemäßer Bremssystem, ohne gleichzeitig eine komplette Entkopplung des Fahrers von dem Bremssystem zu benötigen. Somit hat der Fahrer trotz der vorteilhaften Verblendfähigkeit des Bremssystems zum Anpassen des hydraulischen Bremsmoments des mindestens einen Bremszylinders an das zeitlich variierende Generator-Bremsmoment auch die Möglichkeit, direkt in das Bremssystem hinein zu bremsen. Gleichzeitig ist es möglich, eine gute regenerative Effizienz bei begrenzten Mehrkosten zu erzielen.

Die Erfindung schafft ein Bremssystem, das ein erweitertes Einfachsystem darstellt. Durch die Erweiterung ist der Nachteil der stark begrenzten rekuperativen Effizienz der bekannten Einfachsysteme behebbar, ohne dass für die Erweiterung ein großer Arbeitsaufwand im Vergleich zu einem konventionellen Bremssystem auszuführen ist. Somit ist es mittels der vorliegenden Erfindung möglich, eine ausreichende rekuperative Effizienz eines Bremssystems kostengünstig, bzw. bei minimalen Mehrkosten, zu realisieren.

Insbesondere ist mittels der vorliegenden Erfindung ein Bremssystem mit einer vorteilhaften rekuperativen Effizienz realisierbar, dessen Verwendung nicht auf ein Fahrzeug mit einer achsweisen Bremskreisaufteilung beschränkt ist. Stattdessen sind die erfindungsgemäße Steuervorrichtung und das entsprechende Verfahren für ein Fahrzeug mit einer X-Bremskreisaufteilung, bei welchem die einem gemeinsamen Bremskreis zugeordneten Räder an verschiedenen Fahrzeugachsen angeordnet sind, vorteilhaft einsetzbar. Man kann ein Fahrzeug mit einer X-Bremskreisaufteilung auch so umschreiben, dass die einem gemeinsamen Bremskreis zugeordneten Räder diagonal an dem Fahrzeug angeordnet sind. Somit stellt die vorliegende Erfindung eine vorteilhafte Erweiterung eines rekuperierbaren Bremssystems für Fahrzeuge mit einer X-Bremskreisaufteilung dar.

Gegenüber dem Stand der Technik bieten die erfindungsgemäße Steuervorrichtung und das entsprechende Verfahren auch ein Verblenden eines Generator-Bremsmoments bei einem vergleichsweise starken Abbremsen des Fahrzeugs. Wie unten genauer ausgeführt wird, ist durch die Erweiterung der Einsetzbarkeit der Verblendfunktion ein schnelleres Aufladen einer Fahrzeugbatterie ausführbar. Die vorliegende Erfindung trägt somit vorteilhaft zur Reduzierung des Energieverbrauchs und der Abgasemission beim Fahren eines Fahrzeugs bei.

### Kurze Beschreibung der Zeichnungen

Weitere Merkmale und Vorteile der vorliegenden Erfindung werden nachfolgend anhand der Figuren erläutert. Es zeigen:
- Fig. 1: eine schematische Darstellung einer Ausführungsform der Steuervorrichtung;
- Fig. 2: eine schematische Darstellung einer Ausführungsform des rekuperativen Bremssystems;
- Fig. 3: ein Flussdiagramm zum Darstellen einer ersten Ausführungsform des Verfahrens zum Betreiben eines rekuperativen Bremssystems;
- Fig. 4a bis 4e: fünf Koordinatensysteme zum Darstellen einer zweiten Ausführungsform des Verfahrens zum Betreiben eines rekuperativen Bremssystems;
- Fig. 5a bis 5e: fünf Koordinatensysteme zum Darstellen einer dritten Ausführungsform des Verfahrens zum Betreiben eines rekuperativen Bremssystems; und
- Fig. 6a bis 6e: fünf Koordinatensysteme zum Darstellen einer vierten Ausführungsform des Verfahrens zum Betreiben eines rekuperativen Bremssystems.

### Ausführungsformen der Erfindung

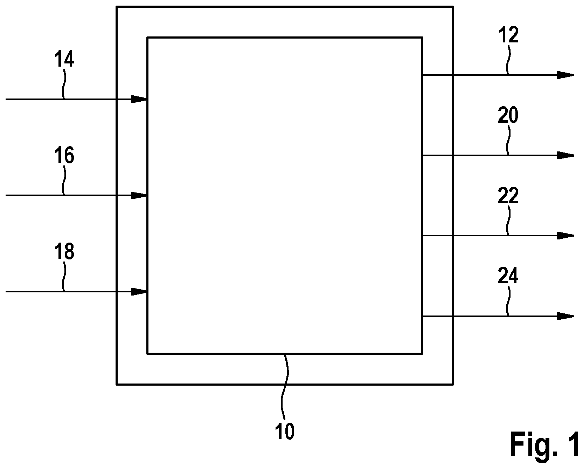

Fig. 1 zeigt eine schematische Darstellung einer Ausführungsform der Steuervorrichtung.

Die in Fig. 1 schematisch dargestellte Steuervorrichtung ist zum Steuern von Komponenten eines (nicht dargestellten) Bremssystems eines Fahrzeugs ausgelegt. Auf die mögliche Auslegung der Komponenten des Bremssystems wird bei den nachfolgenden Figuren genauer eingegangen.

Die in Fig. 1 schematisch dargestellte Steuervorrichtung weist eine Ansteuereinrichtung 10 auf, mittels welcher mindestens ein Ventil eines Bremskreises des Bremssystems vor und/oder während eines Betriebs eines Generators des Bremssystems durch Ausgabe eines Ventil-Steuersignals 12 derart in einen zumindest teilgeöffneten Zustand steuerbar ist, dass Bremsflüssigkeit über das zumindest teilgeöffnete mindestens eine Ventil aus einem Hauptbremszylinder des Bremssystems und/oder dem mindestens einen Bremskreis in mindestens ein Speichervolumen des jeweiligen Bremskreises verschiebbar ist. Somit ist trotz einer Betätigung eines an dem Hauptbremszylinder angeordneten Bremsbetätigungselements, wie z.B. eines Bremspedals, ein Bremsdruckaufbau in mindestens einem an den jeweiligen Bremskreis angebundenen Radbremszylinder verhinderbar. Damit kann die auf diese Weise unterdrückte Bremswirkung des mindestens einen Radbremszylinders zum regenerativen Betreiben des Generators genutzt werden. Dies gewährleistet die oben schon genannte vorteilhafte hohe Rekuperationseffizienz.

Zum hier beschriebenen Ansteuern des mindestens einen Ventils kann die Ansteuereinrichtung 10 verschiedene mittels mindestens eines Sensors und/oder mindestens einer Steuerelektronik bereitgestellte Signale/Informationen, wie beispielsweise eine Generator-Bremsmoment-Information 14 bezüglich eines von dem Generator ausgeübten oder auszuübenden Generator-Bremsmoments, eine bereitgestellte gemessene oder geschätzte Hauptbremszylinder-Druckgröße 16 und/oder weitere Informationssignale 18, auswerten. Die Informationssignale 18 können beispielsweise mindestens eine Größe bezüglich eines von dem Fahrer vorgegebenen Soll-Gesamt-Bremsmoments, bezüglich eines maximal ausführbaren Kann-Generator-Bremsmoments, bezüglich eines Aufladezustands einer Fahrzeugbatterie und/oder bezüglich einer aktuellen Fahrzeuggeschwindigkeit umfassen. Ebenso kann die Ansteuereinrichtung 10 dazu ausgelegt sein, ein als Generator-Bremsmoment-Information 14 bereitgestelltes Generator-Soll-Bremsmoment-Signal zu empfangen und anschließend den Generator so anzusteuern, dass das auszuübende Generator-Bremsmoment eingehalten wird.

Die Ansteuereinrichtung 10 ist beispielsweise dazu ausgelegt ist, anhand der Generator-Bremsmoment-Information 14 eine Steigerung des (ausgeübten oder auszuübenden) Generator-Bremsmoments zu erkennen. Die Ausbildbarkeit der Ansteuereinrichtung 10 ist jedoch nicht auf dieses Ausführungsbeispiel limitiert.

Das mindestens eine Ventil-Steuersignal 12 kann beispielsweise ein Versorgungsstromsignal des mindestens einen Ventils sein. Anstelle eines Versorgungsstromsignals kann jedoch auch ein anderes Signal als das mindestens eine Ventil-Steuersignal 12 an das mindestens eine Ventil bereitgestellt werden. (Das mindestens eine Ventil kann wahlweise als stromlos offenes oder stromlos geschlossenes Ventil ausgebildet sein.)

Das mindestens eine Ventil ist mittels des Ventil-Steuersignals 12 in einen zumindest teilgeöffneten Zustand so steuerbar, dass Bremsflüssigkeit über das zumindest teilgeöffnete mindestens eine Ventil aus dem Hauptbremszylinder des Bremssystems und/oder den mindestens einen Bremskreis des Bremssystems in mindestens ein Speichervolumen des Bremssystems verschiebbar ist. Beispielsweise kann die Ansteuereinrichtung 10 dazu ausgelegt sein, mindestens ein Radauslassventil oder mindestens ein Hochdruckschaltventil als das mindestens eine Ventil derart anzusteuern. Auf diese Weise ist z.B. gewährleistbar, dass Bremsflüssigkeit über das zumindest teilgeöffnete mindestens eine Radauslassventil oder das zumindest teilgeöffnete mindestens eine Hochdruckschaltventil in mindestens eine Niederdruckspeicherkammer als das mindestens eine Speichervolumen verschiebbar ist. Die hier beschriebene Steuervorrichtung ist jedoch nicht auf eine Ausbildung des mindestens einen Ventils als Radauslassventil oder Hochdruckschaltventil und/oder des mindestens einen Speichervolumens als Speicherkammer/Niederdruckspeicherkammer limitiert.

Wie unten genauer ausgeführt wird, kann durch das Ansteuern des mindestens einen Ventils mittels des Ventil-Steuersignals 12 trotz einer Betätigung des Bremsbetätigungselements des Bremssystems durch einen Fahrer das hydraulische Bremsmoment des mindestens einen Radbremszylinder so reduziert werden, dass auch bei einer Steigerung des Generator-Bremsmoments ein von dem Fahrer vorgegebenes Soll-Gesamt-Bremsmoment verlässlich eingehalten wird. Mittels des Verschiebens des Bremsflüssigkeitsvolumens in das mindestens eine Speichervolumen kann insbesondere ein Bremsdruckaufbau in dem mindestens einen Radbremszylinder (nahezu) unterbunden werden. Somit kann die Steuervorrichtung vorteilhaft dazu eingesetzt werden, trotz der Betätigung des Bremsbetätigungselements durch den Fahrer das hydraulische Bremsmoment so gering zu halten, dass durch das häufige Einsetzen des Generators zum Ausüben eines relativ hohen Generator-Bremsmoments ein schnelles Wiederaufladen einer Fahrzeugbatterie, und damit ein geringer Energieverbrauch und eine reduzierte Schadstoffemission des mit dem Bremssystem ausgestatteten Fahrzeugs realisierbar sind. (Dieser Vorteil der Steuervorrichtung ist oben bereits mit dem Begriff "Volumenverblendung" umschrieben.)

Die Ansteuereinrichtung 10 ist zusätzlich dazu ausgelegt, unter Berücksichtigung der Generator-Bremsmoment-Information 14 bezüglich des von dem Generator ausgeübten oder auszuübenden Generator-Bremsmoments, der bereitgestellten gemessenen oder geschätzten Hauptbremszylinder-Druckgröße 16 und/oder einer von zumindest der Generator-Bremsmoment-Information 14 oder der Hauptbremszylinder-Druckgröße 16 abgeleiteten Auswertegröße eine Soll-Kraftdifferenzgröße bezüglich einer von einem Bremskraftverstärker des Bremssystems ausübbaren Verstärkerkraft festzulegen. Unter Berücksichtigung der festgelegten Soll-Kraftdifferenzgröße ist mindestens ein Bremskraftverstärker-Steuersignal 20 an den Bremskraftverstärker ausgebbar. Der Bremskraftverstärker, bzw. dessen Steuerelektronik, ist mittels des Bremskraftverstärker-Steuersignals 20 so ansteuerbar ist, dass die Verstärkerkraft um eine der Soll-Kraftdifferenzgröße entsprechende Ist-Kraftdifferenz variierbar ist.

Die von zumindest der Generator-Bremsmoment-Information 14 abgeleitete Auswertegröße kann beispielsweise eine Schätzung eines durch das Öffnen des mindestens einen Ventils in das mindestens eine Speichervolumen verschobenen Bremsflüssigkeitsvolumens umfassen. Eine derartige Ausbildung der Ansteuereinrichtung 10 ist jedoch optional.

Die Bremsflüssigkeit-Verschiebung über das mindestens eine geöffnete Ventil (aufgrund des verblendeten variierenden Generator-Bremsmoments) kann eine Änderung des Hauptbremszylinderdrucks (Innendruck in dem Hauptbremszylinder) bewirken. Dies kann dazu führen, dass eine Hauptbremszylinder-Gegenkraft, welche auf mindestens einen in den Hauptbremszylinder hineinverstellbaren Kolben (Primärkolben/Stangenkolben), das Bremsbetätigungselement und/oder mindestens eine zwischen dem Kolben und dem Bremsbetätigungselement angeordnete Verbindungseinrichtung, wie beispielsweise eine Eingangsstange oder eine Mechanik eines Bremskraftverstärkers, ausgeübt wird, variiert. Die Ansteuereinrichtung 10 ist vorzugsweise dazu ausgelegt, die Soll-Kraftdifferenzgröße so festzulegen, dass die Änderung der Hauptbremszylinder-Gegenkraft mittels einer Änderung der Verstärkerkraft kompensierbar ist. Dies ist realisierbar, indem die Soll-Kraftdifferenzgröße so festgelegt wird, dass eine entsprechende Änderung der Verstärkerkraft zu der Änderung der Hauptbremszylinder-Gegenkraft korrespondiert. Insbesondere kann die Soll-Kraftdifferenzgröße so festlegbar sein, dass der mindestens eine Kolben (Primärkolben/Stangenkolben), das Bremsbetätigungselement und/oder die mindestens eine Verbindungseinrichtung trotz der durch die Bremsflüssigkeit-Verschiebung ausgelösten Änderung der Hauptbremszylinder-Gegenkraft in ihren Stellungen verharren. Sofern das Generator-Bremsmoment zeitlich zunimmt, ist die Ansteuervorrichtung 10 vorzugsweise dazu ausgelegt, eine einer Reduzierung der Hauptbremszylinder-Gegenkraft entsprechende Verringerung der Verstärkerkraft festzulegen. Entsprechend kann bei einer zeitlichen Abnahme des Generator-Bremsmoments mittels der Ansteuereinrichtung 10 die Verstärkerkraft indirekt so neufestlegbar sein, dass die Verstärkerkraft des Bremskraftverstärkers entsprechend der Zunahme der Hauptbremszylinder-Gegenkraft steigerbar ist.

Die Ansteuereinrichtung 10 kann beispielsweise dazu ausgelegt sein, eine Bremsmoment/Gegenkraft-Kennlinie, eine Volumen-Gegenkraft-Kennlinie und/oder eine Hauptbremszylinderdruck/Gegenkraft-Kennlinie des Bremssystems bei der Festlegung der Soll-Kraftdifferenzgröße zu berücksichtigen. Insbesondere können mittels der Ansteuereinrichtung 10 die unten genauer beschriebenen Verfahrensschritte ausführbar sein.

Durch das Reduzieren oder Steigern der Verstärkerkraft ist gewährleistbar, dass trotz eines Verblendens des zeitlich variierenden Generator-Bremsmoments und des dazu verschobenen Bremsflüssigkeitsvolumens der Fahrer bei der Betätigung des Bremsbetätigungselements, wie beispielsweise eines Bremspedals, ein standardgemäßes Bremsbetätigungsgefühl wahrnimmt. (Zusätzlich zu der Verblendbarkeit des zeitlich variierenden Generator-Bremsmoments gewährleistet die Steuervorrichtung somit auch den Bremsbetätigungskomfort, welcher oben mittels des Begriffs "Kraftverblendung" umschrieben ist.)

In einer vorteilhaften Weiterbildung kann die Ansteuereinrichtung 10 zusätzlich dazu ausgelegt sein, anhand der Generator-Bremsmoment-Information 14 und/oder eines der Informationssignale 18 eine Reduzierung des Generator-Bremsmoments zu erkennen. Gegebenenfalls ist die Ansteuereinrichtung 10 dazu ausgelegt, bei einer Reduzierung des mittels des Generators ausgeübten Generator-Bremsmoments und/oder einer Deaktivierung des Generators mindestens eine Pumpe des jeweiligen Bremskreises mittels mindestens eines Pumpen-Ansteuersignals 22 so anzusteuern, dass Bremsflüssigkeit mittels der mindestens einen Pumpe aus dem mindestens einen Speichervolumen in mindestens einen Radbremszylinder des Bremssystems pumpbar ist. Somit kann trotz der zeitlichen Abnahme des Generator-Bremsmoments mittels einer Erhöhung des hydraulischen Bremsmoments des mindestens einen Radbremszylinders das von dem Fahrer angeforderte Soll-Gesamt-Bremsmoment verlässlich eingehalten werden.

Des Weiteren kann die Ansteuereinrichtung 10 zusätzlich dazu ausgelegt sein, während des Betriebs der mindestens einen Pumpe zum Pumpen von Bremsflüssigkeit aus dem mindestens einen Speichervolumen in den mindestens einen Radbremszylinder mindestens ein Schließsignal 24 an mindestens ein (nicht dargestelltes) Umschaltventil des Bremssystems auszugeben. Mittels des mindestens einen Schließsignals 24 ist das mindestens eine Umschaltventil in einen geschlossenen Zustand steuerbar. Auf diese Weise ist verhinderbar, dass der Fahrer aufgrund der mindestens einen aktivierten Pumpe einen Rückstoß während der Betätigung des Bremsbetätigungselements wahrnimmt.

In einer vorteilhaften Weiterbildung kann mittels der Steuervorrichtung/Ansteuereinrichtung 10 nach einem Beenden des Betriebs der mindestens einen Pumpe zum Pumpen von Bremsflüssigkeit aus dem mindestens einen Speichervolumen in den mindestens einen Radbremszylinder, bzw. nach der erfolgten Rückförderung, das (vorzugsweise stetig stellbar ausgebildete) mindestens eine Umschaltventil für ein langsames Öffnen angesteuert werden. Auf diese Weise können eventuelle Druckdifferenzen während des Öffnens des mindestens einen Umschaltventils ausgeglichen werden. Auch während dieses langsamen Ansteuerns/Öffnens des mindestens einen Umschaltventils kann die Hauptbremszylinder-Druckgröße 16 fortlaufend ausgewertet werden, um vorteilhafte eine Anpassung der Verstärkerkraft auszuführen.

Die Steuervorrichtung kann zusätzlich dazu ausgelegt sein, die im Folgenden anhand des Bremssystems oder der unten beschriebenen Verfahrensschritte erläuterten Funktionen auszuführen. Bezüglich vorteilhafter Weiterbildungen der Steuervorrichtung wird deshalb auf die nachfolgenden Textstellen verwiesen.

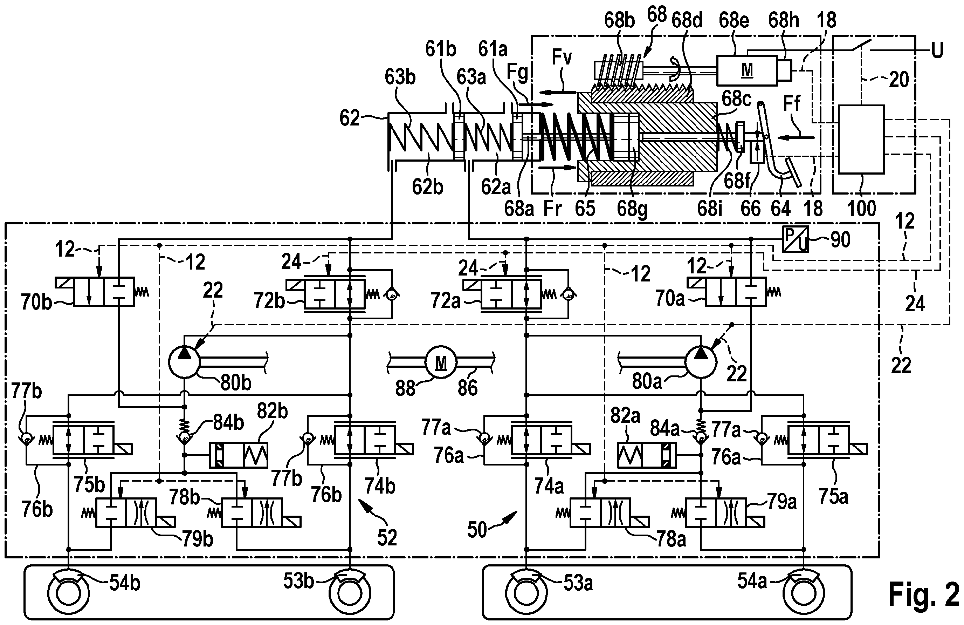

Fig. 2 zeigt eine schematische Darstellung einer Ausführungsform des rekuperativen Bremssystems.

Das in Fig. 2 schematisch wiedergegebene Bremssystem ist beispielsweise in einem Hybrid- und in einem Elektrofahrzeug vorteilhaft einsetzbar. Die Einsetzbarkeit des im Weiteren beschriebenen Bremssystems ist jedoch nicht auf die Verwendung in einem Hybrid- oder in einem Elektrofahrzeug beschränkt.

Das Bremssystem hat einen ersten Bremskreis 50 mit einem ersten Radbremszylinder 53a und einem zweiten Radbremszylinder 54a. Optionaler Weise hat das Bremssystem auch einen zweiten Bremskreis 52 mit einem dritten Radbremszylinder 53b und einem vierten Radbremszylinder 54b. Bevorzugter Weise ist das Bremssystem mit zwei Bremskreisen 50 und 52 für ein Fahrzeug mit X-Bremskreisaufteilung ausgelegt. In diesem Fall sind der erste Radbremszylinder 53a und der dritte Radbremszylinder 53b einer ersten Fahrzeugachse zugeordnet, während der zweite Radbremszylinder 54a und der vierte Radbremszylinder 54b einer anderen Fahrzeugachse zugeordnet sind. Beispielsweise können der erste Radbremszylinder 53a und der dritte Radbremszylinder 53b der Vorderachse zugeordnet sein, während der zweite Radbremszylinder 54a und der vierte Radbremszylinder 54b der Hinterachse zugeordnet sind. Die einem Bremskreis 50 und 52 zugeordneten Räder können insbesondere diagonal am Fahrzeug angeordnet sein. Das im Weiteren beschriebene Bremssystem ist jedoch nicht auf eine X-Bremskreisaufteilung beschränkt. Stattdessen ist das Bremssystem auch einsetzbar, wenn die einem gemeinsamen Bremskreis 50 oder 52 zugeordneten Räder achsweise oder auf einer Seite des Fahrzeugs angeordnet sind.

Das Bremssystem weist einen Hauptbremszylinder 62 auf, welcher beispielsweise als Tandemhauptbremszylinder ausführbar ist. Der Hauptbremszylinder 62 kann mindestens einen verstellbaren Kolben 61a und 61b haben, welcher zumindest teilweise in mindestens eine Druckkammer 62a oder 62b des Hauptbremszylinders 62 verstellbar ist. Bevorzugter Weise umfasst der Hauptbremszylinder 62 einen als Stangenkolben bezeichenbaren ersten verstellbaren Kolben 61a, welcher zumindest teilweise in eine dem ersten Bremskreis 50 zugeordnete erste Druckkammer 62a des Hauptbremszylinders 62 hineinragt, und einen als Schwimmkolben bezeichenbaren zweiten verstellbaren Kolben 61b, der zumindest teilweise in eine dem zweiten Bremskreis 52 zugeordnete zweite Druckkammer 62b des Hauptbremszylinders 62 hineinragt. In einer bevorzugten Ausführungsform ist der Schwimmkolben so verstellbar, dass bei einem Verstellen des Schwimmkolbens in eine erste Richtung das erste Innenvolumen der ersten Druckkammer 62a abnimmt, während das Innenvolumen der zweiten Druckkammer 62b zunimmt. Entsprechend kann über ein Verstellen des Schwimmkolbens in eine zweite Richtung das Innenvolumen der ersten Druckkammer 62a bei einer Abnahme des Innenvolumens der zweiten Druckkammer 62b zunehmen. Das Bremssystem ist jedoch nicht auf die Verwendung eines Tandemhauptbremszylinders oder auf eine bestimmte Ausbildung des Hauptbremszylinders 62 beschränkt. Der Hauptbremszylinder 62 kann über mindestens eine Bremsflüssigkeit-Austauschöffnung, wie beispielsweise eine Schnüffelbohrung, mit einem (nicht skizzierten) Bremsflüssigkeitsreservoir verbunden sein.

Das Bremssystem weist vorzugsweise ein an dem Hauptbremszylinder 62 angeordnetes Bremsbetätigungselement 64, wie beispielsweise ein Bremspedal, auf. Vorteilhafterweise ist das Bremsbetätigungselement 64 derart an dem Hauptbremszylinder 62 angeordnet, dass bei einem Betätigen des Bremsbetätigungselements 64 mit zumindest einer Schwellstärke eine auf das Bremsbetätigungselement 64 aufgebrachte Fahrerbremskraft Ff auf den mindestens einen verstellbaren Kolben 61a und 61b, wie beispielsweise auf den Stangenkolben und den Schwimmkolben, so übertragbar ist, dass der Kolben 61a und 61b mittels der Fahrerbremskraft Ff verstellbar ist. Bevorzugter Weise wird mittels dieses Verstellens des Kolbens ein Innendruck in mindestens einer Druckkammer 62a und 62b des Hauptbremszylinders 62 gesteigert. Der Verstellbewegung des mindestens einen Kolbens 61a und 61b kann eine Hauptbremszylinder-Gegenkraft Fg, welche aus einem Innendruck und/oder mindestens einer Feder 63a und 63b in der mindestens einen Druckkammer 62a und 62b resultiert, entgegenwirken. Auch eine Rückstellkraft Fr einer Rückstellfeder 65 kann entgegen der Verstellbewegung des mindestens einen Kolbens 61a und 61b gerichtet sein.

Bevorzugter Weise umfasst das Bremssystem auch mindestens einen Bremsbetätigungselement-Sensor 66, mittels welchem die Betätigungsstärke der Betätigung des Bremsbetätigungselements 64 durch den Fahrer ermittelbar ist. Der Bremsbetätigungselement-Sensor 66 kann beispielsweise einen Pedalwegsensor, einen Differenzwegsensor und/oder einen Stangenwegsensor umfassen. Zur Erfassung der Betätigungsstärke, welche dem Fahrerbremswunsch entspricht, ist jedoch auch eine anders geartete Sensorik anstelle oder zusätzlich zu den hier aufgezählten Sensortypen einsetzbar.

Das dargestellte Bremssystem weist auch einen Bremskraftverstärker 68, vorzugsweise eine elektromechanischen Bremskraftverstärker 68, auf. Der Bremskraftverstärker 68 kann insbesondere ein stetig regelbarer/stetig steuerbarer Bremskraftverstärker sein. Ein elektromechanischer Bremskraftverstärker 68 zeichnet sich durch eine variable Verstärkung aus. Somit kann der elektromechanische Bremskraftverstärker 68 im Gegensatz zu einem konventionellen Vakuum-Bremskraftverstärker in seinen Eigenschaften (mittels der unten genauer beschriebenen Steuervorrichtung 100) verändert werden. Damit ist es mittels eines elektromechanischen Bremskraftverstärkers 68 möglich, die für den Fahrer wahrnehmbare Bremsbetätigungskraft während eines Bremsens auf einfache Weise zu beeinflussen. Anstelle eines elektromechanischen Bremskraftverstärkers 68 kann das Bremssystem auch einen Bremskraftverstärker 68 eines anderen Typs haben. Es ist ausreichend, dass durch den Bremskraftverstärker 68 eine mittels der Steuervorrichtung 100 variierbare Verstärkerkraft Fv zusammen mit der Fahrerbremskraft Ff auf den mindestens einen Kolben 61a und 61b übertragbar ist.

Wie in Fig. 2 dargestellt ist, wirken auf eine Ausgangsstange 68a eines (elektromechanischen) Bremskraftverstärkers 68, und entsprechend auf das Bremsbetätigungselement 64, somit mehrere Kräfte. Während die Fahrerbremskraft Ff und die Verstärkerkraft Fv des Bremskraftverstärkers die Ausgangsstange 68a in Richtung des Hauptbremszylinders 62 drücken, wirken die Rückstellkraft Fr der Rückstellfeder 65 und die Hauptbremszylinder-Gegendruckkraft Fg der Einbremsbewegung der Ausgangsstange 68a entgegen. Man kann dies auch so umschreiben, dass die Verstärkerkraft Fv den Fahrer bei der Betätigung des Bremsbetätigungselements 64 unterstützt, während die Rückstellkraft Fr der Rückstellfeder 65 sicherzustellen versucht, dass die Mechanik des Bremskraftverstärkers 68 und des Bremsbetätigungselements 64 nach der Bremsbetätigung in ihre Ausgangsstellungen zurückkehren, und die Hauptbremszylinder-Gegenkraft Fg der Einbremsbewegung des Fahrers entgegenwirkt. Befinden sich die Kräfte Ff, Fv, Fr und Fg in einem Gleichgewicht, so bewegen sich die Ausgangsstange 68a und das Bremsbetätigungselement 64 nicht. (Dieser Zustand liegt in der Regel vor, sofern der Fahrerbremswunsch konstant bleibt.)

Die in Fig. 2 wiedergegebene Ausbildung der Mechanik des Bremskraftverstärkers 68 mit einem über ein Getriebe 68b in einem Eingriff mit einem Verstärkerkörper 68c (mit einer Gewindefläche 68d) stehenden Motor 68e, wobei der Verstärkerkörper 68c zusammen mit einer die Fahrerbremskraft Ff übertragende Eingangsstange 68f auf eine Reaktionsscheibe 68g wirken, welche die Ausgangsstange 68a kontaktiert, ist lediglich beispielhaft zu interpretieren. Auch die Ausstattung des Motors 68e mit einem Sensor 68h, wie beispielsweise einem Drehwinkelsensor, ist optional. Außerdem kann sich die Eingangsstange 68f über eine weitere Feder 68i an dem Verstärkerkörper 68c abstützen.

Nachfolgend werden mit Bezug zu Fig. 2 weitere Komponenten der Ausführungsform des Bremssystems beschrieben. Es wird ausdrücklich drauf hingewiesen, dass die im Weiteren beschriebenen Komponenten des Bremssystems lediglich ein Beispiel für eine mögliche Ausbildung des vorteilhaften Bremssystems darstellen. Ein Vorteil des Bremssystems liegt vor allem darin, dass die Bremskreise 50 und 52 nicht auf eine bestimmte Ausbildung oder auf das Einsetzen bestimmter Komponenten festgelegt sind. Stattdessen können die Bremskreise 50 und 52 mit einer hohen Wahlfreiheit modifiziert werden, ohne dass die Vorteile der Ausführungsform des Bremssystems beeinträchtigt werden:
Jeder der Bremskreise 50 und 52 ist mit einem Hochdruckschaltventil 70a und 70b und einem Umschaltventil 72a und 72b so ausgebildet, dass der Fahrer über den Hauptbremszylinder 62 direkt in die Radbremszylinder 53a, 53b, 54a und 54b hineinbremsen kann. In dem ersten Bremskreis 50 sind dem ersten Radbremszylinder 53a ein erstes Radeinlassventil 74a und dem zweiten Radbremszylinder 54a ein zweites Radeinlassventil 75a, jeweils mit einer parallel dazu verlaufenden Bypassleitung 76a und einem in jeder Bypassleitung 76a angeordneten Rückschlagventil 77a zugeordnet. Zusätzlich sind ein erstes Radauslassventil 78a dem ersten Radbremszylinder 53a und ein zweites Radauslassventil 79a dem zweiten Radbremszylinder 54a zugeordnet. Entsprechend können auch in dem zweiten Bremskreis 52 ein drittes Radeinlassventil 74b dem dritten Radbremszylinder 53b und ein viertes Radeinlassventil 75b dem dritten Radbremszylinder 54b zugeordnet sein. Parallel zu jedem der beiden Radeinlassventile 74b und 75b des zweiten Bremskreises 52 kann jeweils eine Bypassleitung 76b mit einem darin angeordneten Rückschlagventil 77b verlaufen. Des Weiteren können auch in dem zweiten Bremskreis 52 ein drittes Radauslassventil 78b dem dritten Radbremszylinder 53b und ein viertes Radauslassventil 79b dem vierten Radbremszylinder 54b zugeordnet sein.

Außerdem umfasst jeder der Bremskreise 50 und 52 eine Pumpe 80a und 80b, deren Ansaugseite mit den Radauslassventilen 78a und 79a oder 78b und 79b verbunden ist und deren Förderseite zu dem zugeordneten Umschaltventil 72a oder 72b gerichtet ist. Eine zwischen den Radauslassventilen 78a und 79a oder 78b und 79b und der Pumpe 80a oder 80b angeordnete Speicherkammer 82a oder 82b (z.B. einem Niederdruckspeicher und/oder einer Speicherkammer) und ein zwischen der Pumpe 80a oder 80b und der Speicherkammer 82a oder 82b liegendes Überdruckventil 84a oder 84b weisen die Bremskreise 50 und 52 ebenso auf.

Die Pumpen 80a und 80b können auf einer gemeinsamen Welle 86 eines Motors 88 angeordnet sein. Jede der Pumpen 80a und 80b kann als Ein-Kolben-Pumpen ausgebildet sein. Anstelle von einer Ein-Kolben-Pumpe kann jedoch auch ein anderer Pumpentyp für mindestens eine der Pumpen 80a und 80b verwendet werden. Anders ausgeführte Modulationssysteme, wie z. B. Pumpen mit mehreren oder weniger Kolben, asymmetrische Pumpen oder Zahnradpumpen sind ebenfalls einsetzbar.

Das Bremssystem ist somit als ein modifiziertes Standard-Modulationssystem, insbesondere als Zwei-Kolben-ESP-System, ausführbar. Außerdem kann jeder der beiden Bremskreise 50 und 52 noch mindestens einen Drucksensor 90, insbesondere an einer Zuleitung eines als Vorderachsbremszange genutzten ersten Radbremszylinders 53a und/oder dritten Radbremszylinder s53b, umfassen.

Das mit einem (nicht dargestellten) Generator zusammenwirkende Bremssystem und ist außerdem mit der oben schon beschriebenen Steuervorrichtung 100 ausgestattet. Durch das oben schon beschriebene Ansteuern des mindestens einen Radauslassventils 78a, 78b, 79a und 79b oder des mindestens einen Hochdruckschaltventils 70a und 70b (bei einem Weglassen des mindestens einen Rückschlagventils 84a und 84b) mittels des mindestens einen Ventil-Ansteuersignals 12, kann das hydraulische Bremsmoment des Bremssystems bei einem steigenden Generator-Bremsmoment reduziert werden. Entsprechend kann durch das Ansteuern der mindestens einen Pumpe 80a und 80b mittels des mindestens einen Pumpen-Steuersignals 22 das hydraulische Bremsmoment so gesteigert werden, dass trotz einer zeitlichen Abnahme des Generator-Bremsmoments der Fahrerbremswunsch/das Soll-Gesamt-Bremsmoment verlässlich einhaltbar sind.

Regeneratives Bremsen zeichnet sich dadurch aus, dass auf das Fahrzeug ein nicht konstantes, aber bekanntes Generator-Bremsmoment des Generators wirkt. Über den bekannten Bremswunsch des Fahrers und das Generator-Bremsmoment kann ein Koordinator das zum Einhalten des Soll-Gesamt-Bremsmoments erforderliche hydraulische Bremsmoment berechnen. Reicht das aktuell verfügbare Generator-Bremsmoment aus, um den Fahrerbremswunsch vollständig umzusetzen, so kann mittels des hier dargestellten Bremssystems rein regenerativ gebremst werden. Ist der Fahrerbremswunsch größer als das momentan verfügbare Generator-Bremsmoment, so kann mittels des hier dargestellten Bremsmoments zusätzlich zu dem Generator-Bremsmoment ein hydraulisches Bremsmoment aufgebaut werden, wobei die Summe aus dem Generator-Bremsmoment dem hydraulischen Bremsmoment vorzugsweise gleich dem Fahrerbremswunsch/Soll-Gesamt-Bremsmoment ist. Wird kein Generator-Bremsmoment aktiviert, beispielsweise aufgrund einer vollständigen Aufladung der mindestens einen Fahrzeugbatterie und/oder einer aktuellen Fahrzeuggeschwindigkeit unter einer Generator-Einsetz-Mindestgeschwindigkeit, so ist mittels des hier dargestellten Bremssystems auch eine rein hydraulische Bremsung ausführbar. Die Funktionsweise des Bremssystems ist somit so an eine aktuelle Einsetzbarkeit des Generators anpassbar, dass gleichzeitig mit einem schnellen Aufladen der Fahrzeugbatterie zum Reduzieren des Energieverbrauchs und der Schadstoffemission des mit dem Bremssystem ausgestatteten Fahrzeugs der Fahrerbremswunsch/das Soll-Gesamt-Bremsmoment verlässlich einhaltbar ist.

Bei einer rein regenerativen Bremsung oder einer teil-regenerativen Bremsung, d. h. bei einem Generator-Bremsmoment ungleich Null, liegt aufgrund der Bremsflüssigkeitsverschiebung (über das mindestens eine mittels des Ventil-Steuersignals 12 angesteuerten Ventils 78a, 78b, 79a, 79b, 70a und/oder 70b) ein gegenüber der Fahrerbremskraft Ff reduzierter Bremsdruck in dem Bremssystem vor. Somit liegen auch ein Hauptbremszylinderdruck und die Hauptbremszylinder-Gegenkraft Fg unter ihren der Fahrerbremskraft Ff (bei einem Generator-Bremsmoment gleich Null) entsprechenden Vergleichswerten. Die Reduzierung der Hauptbremszylinder-Gegenkraft Fg (aufgrund der Bremsflüssigkeitsverschiebung über das mindestens eine mittels des Ventil-Steuersignals 12 angesteuerten Ventils 78a, 78b, 79a, 79b, 70a und/oder 70b) beeinträchtig herkömmlicherweise das Kräftegleichgewicht aus den Kräften Ff, Fv, Fr und Fg. Bei einem Bremssystem gemäß dem Stand der Technik spürt der Fahrer während der Betätigung des Bremsbetätigungselements 64 diese Änderung der Hauptbremszylinder-Gegenkraft als ein Zittern, einen Rückstoß, ein Vibrieren und/oder ein ZurückVerschieben des Bremsbetätigungselements 64.

Durch das Ansteuern des Bremskraftverstärkers 68 mittels des von der Steuervorrichtung 100 ausgegebenen Bremskraftverstärker-Steuersignals 20 kann die Verstärkerkraft Fv jedoch an die Änderung der Hauptbremszylinder-Gegenkraft Fg angepasst werden. Auf diese Weise ist verhinderbar, dass der Fahrer eine Rückwirkung des über das mindestens eine mittels des Ventil-Steuersignals 12 angesteuerten Ventils 78a, 78b, 79a, 79b, 70a und/oder 70b verschobenen Bremsflüssigkeitsvolumens spürt. Man kann dies auch so umschreiben, dass auf eine sich verändernde Hauptbremszylinder-Gegenkraft Fg mit einer angepassten Verstärkerkraft Fv reagiert wird, um das Kräftegleichgewicht aus den Kräften Ff, Fv, Fr und Fg zu erhalten. Rückwirkungen auf das Bremsbetätigungselement 64 sind auf diese Weise verlässlich verhinderbar. (Diese Funktion ist oben mittels des Begriffs "Kraftverblendung" umschrieben.)

Es wird darauf hingewiesen, dass die Kraftverblendungsfunktionalität des hier beschriebenen Bremssystems nicht auf den Jump-in-Bereich (zum Beispiel eines Vakuum-Boosters) beschränkt ist. Der zum rekuperativen Bremsen nutzbare Verzögerungsbereich ist somit signifikant erweitert.

Mittels des Bremskraftverstärker-Steuersignals 20 kann beispielsweise eine Stromversorgung U des Bremskraftverstärkers 68 ansteuerbar sein. Die Steuervorrichtung kann auch das oben schon beschriebene Schließsignal 24 während des Betreibens der mindestens einen Pumpe 80a und 80b ausgeben. Außerdem kann die Steuervorrichtung 100 zusätzlich dazu ausgelegt sein, während des Ansteuerns des Bremskraftverstärkers 68 ein Sensorsignal/Informationssignal 18 mindestens eines Sensors 66 und/oder 68h zu berücksichtigen. Eine vorteilhafte Regelgüte ist somit gewährleistet.

Das hier beschriebene Bremssystem kommt trotz seiner Vielzahl von ausführbaren Funktionen mit einem (elektromechanischen) Bremskraftverstärker 68 und einem (modifizierten) Standard-ESP-Modulationssystem aus. Auf einen Zusatzaktuator kann verzichtet werden. Aufgrund der geringen Anzahl von Komponenten des Bremssystems, welche bei dem Verblenden des Generator-Bremsmoments und einem anschließenden Anpassen der Verstärkerkraft Fv beteiligt sind, weist das Bremssystem eine signifikant reduzierte Komplexität auf. Dies reduziert die Kosten des Bremssystems. Außerdem kann das Bremssystem aufgrund seines vergleichsweise einfachen Aufbaus leicht in einem Fahrzeug montiert werden. Es benötigt auch relativ wenig Bauraum.

Aktive Druckaufbauten, d. h. Bremsanforderungen ohne eine Betätigung des Bremsbetätigungselements 64, können im dargestellten Bremssystem über die mindestens eine Pumpe 80a und 80b und die geöffneten Hochdruckschaltventile 70a und 70b und die geschlossenen Radauslassventile 78a, 78b, 79a und 79b erfolgen. Außerdem können solche aktiven Druckaufbauten ebenfalls mittels des (elektromechanischen) Bremskraftverstärkers 68 erfolgen. (Die gewünschte Druckaufbaudynamik, die Geräuschentwicklung und ein Bremsbetätigungsgefühl können darüber entscheiden, mit welchem Aktuator der Druckaufbau ausgeführt wird.)

Bei einem Ausfall des Modulationssystems weist das Bremssystem noch eine verstärkte Bremsfunktion an allen Radbremszylindern 53a, 53b, 54a und 54b auf und hat damit keine zusätzlichen Funktionseinschränkungen im Vergleich zu einem konventionellen System. Bei einem Ausfall des (elektromechanischen) Bremskraftverstärkers 68 kann der Fahrer bei der Betätigung des Bremsbetätigungselements mittels des Modulationssystems (mittels der mindestens einen Pumpe 80a und 80b) unterstützt werden. Auch in diesem Fehlerfall unterscheidet sich die Funktionseinschränkung nicht von einem konventionellen Bremssystem mit einem Bremskraftverstärker 68, wie beispielsweise einem Vakuum-Bremskraftverstärker.

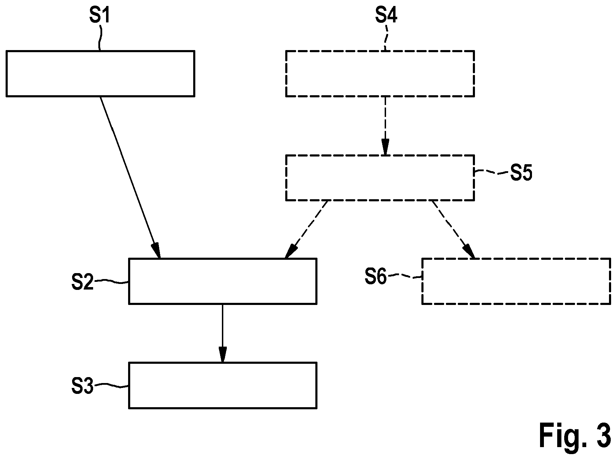

Fig. 3 zeigt ein Flussdiagramm zum Darstellen einer ersten Ausführungsform des Verfahrens zum Betreiben eines rekuperativen Bremssystems.

Mittels des nachfolgend beschriebenen Verfahrens kann ein rekuperatives Bremssystem, insbesondere eines Hybrid- oder Elektrofahrzeugs, betrieben werden. Beispielsweise können die oben beschriebenen Ausführungsformen der Steuervorrichtung und des rekuperativen Bremssystems mittels des hier beschriebenen Verfahrens betrieben werden. Es wird jedoch darauf hingewiesen, dass die Ausführbarkeit des im Weiteren beschriebenen Verfahrens nicht auf die Verwendung dieser Ausführungsformen oder auf eine bestimmte Auslegung des damit betriebenen Bremssystems festgelegt ist.

In einem Verfahrensschritt S1 wird mindestens ein Ventil eines Bremskreises des Bremssystems vor und/oder während eines Betriebs eines Generators des Bremssystems derart angesteuert, dass Bremsflüssigkeit über das zumindest teilgeöffnete mindestens eine Ventil aus einem Hauptbremszylinder des Bremssystems und/oder dem mindestens einen Bremskreis in mindestens ein Speichervolumen des jeweiligen Bremskreises verschoben wird. Durch das Verschieben der Bremsflüssigkeit über das zumindest teilgeöffnete mindestens eine Ventil kann trotz einer Betätigung eines an dem Hauptbremszylinder angeordneten Bremsbetätigungselements ein Bremsdruckaufbau in dem mindestens einen Bremskreis und/oder mindestens einem daran angebundenen Radbremszylinder (wie z.B. einer Radbremszange) verhindert werden. Somit ist trotz der Betätigung des an dem Hauptbremszylinder angeordneten Bremsbetätigungselements, wie beispielsweise eines Bremspedals, verhinderbar, dass mittels des mindestens einen Radbremszylinders ein hydraulisches Bremsmoment auf mindestens eines der Räder ausgeübt wird. Die entfallende Bremswirkung des mindestens einen Radbremszylinders kann somit für eine vorteilhaft hohe Rekuperationseffizienz ohne ein Überschreiten einer von dem Fahrer vorgegebenen Soll-Gesamt-Fahrzeugverzögerung genutzt werden.

Beispielsweise können in dem Verfahrensschritt S1 mindestens ein Radauslassventil oder mindestens ein Hochdruckschaltventil als das mindestens eine Ventil zumindest teilweise geöffnet werden. Insbesondere kann die Bremsflüssigkeit über das zumindest teilgeöffnete mindestens eine Radauslassventil oder das zumindest teilgeöffnete mindestens eine Hochdruckschaltventil in eine Speicherkammer als das mindestens eine Speichervolumen verschoben werden. Die mindestens eine Speicherkammer ist vorzugsweise eine Niederdruckspeicherkammer sein. Sofern die Bremsflüssigkeit über das zumindest teilgeöffnete mindestens eine Hochdruckschaltventil verschoben wird, erfolgt dies zusätzlich über mindestens eine Rückschlagventil-freie Leitungseinrichtung zwischen dem jeweiligen Hochdruckschaltventil und dem zugeordneten Speichervolumen. Für das Ausführen des Verfahrensschritts S1 können somit Komponenten des Bremssystems verwendet werden, welche herkömmlicherweise an einem standardgemäßen Bremssystem bereits vorhanden sind. Das Ausführen des Verfahrensschritts S1 ist somit auch bei einem kostengünstigen und wenig Bauraum beanspruchenden Bremssystem möglich.

Das Verschieben der Bremsflüssigkeit über das mindestens eine Hochdruckschaltventil ist zusätzlich mit dem Vorteil verbunden, dass selbst ein vergleichsweise geringer Bremsdruckaufbau in dem mindestens einen Radbremszylinder unterbleibt. Somit kann mittels des Verschiebens der Bremsflüssigkeit über das mindestens eine Hochdruckschaltventil selbst ein Bremsdruck von (nahezu) Null in den mindestens einen Radbremszylinder eingestellt/eingehalten werden.

Das Verfahren weist auch einen Verfahrensschritt S2 auf, in welchem eine Soll-Kraftdifferenzgröße bezüglich einer von einem Bremskraftverstärker ausgeübten Verstärkerkraft unter Berücksichtigung einer Generator-Bremsmoment-Information bezüglich eines von dem Generator ausgeübten Generator-Bremsmoments, einer gemessenen oder geschätzten Hauptbremszylinder-Druckgröße und/oder einer von zumindest der Generator-Bremsmoment-Information oder der Hauptbremszylinder-Druckgröße abgeleiteten Auswertegröße festgelegt wird. Anschließend wird der Bremskraftverstärker in dem Verfahrensschritt S3 unter Berücksichtigung der festgelegten Soll-Kraftdifferenzgröße angesteuert. Auf diese Weise ist die Verstärkerkraft um eine der Soll-Kraftdifferenzgröße entsprechende Ist-Kraftdifferenz variierbar. Beispielsweise kann somit bei einer zeitlichen Zunahme/Steigerung des Generator-Bremsmoments zusätzlich zu der Reduzierung des hydraulischen Bremsmoments auch die Verstärkerkraft so reduziert werden, dass eine durch das Verschieben der Bremsflüssigkeit in das mindestens eine Speichervolumen bewirkte Reduzierung der Hauptbremszylinder-Gegenkraft (zumindest teilweise) kompensiert wird.

Vorzugsweise wird die Soll-Kraftdifferenzgröße zumindest unter Berücksichtigung des Generator-Bremsmoments (bzw. eines um die Änderung des Generator-Bremsmoments gesteigerten oder reduzierten hydraulischen Bremsmoments) und einer Bremsmoment/Gegenkraft-Kennlinie des Bremssystems bezüglich einer Relation zwischen einem hydraulischen Bremsmoment des Bremssystems und einer dadurch bewirkten Hauptbremszylinder-Gegenkraft auf ein an einem Hauptbremszylinder des Bremssystems angeordnetes Bremsbetätigungselement festgelegt. Als Alternative oder als Ergänzung dazu kann die Soll-Kraftdifferenzgröße unter Berücksichtigung der gemessenen Hauptbremszylinder-Druckgröße und einer HauptbremszylinderDruck/Gegenkraft-Kennlinie des Bremssystems bezüglich einer Relation zwischen einem Hauptbremszylinderdruck und der dadurch bewirkten Hauptbremszylinder-Gegenkraft auf das Bremsbetätigungselement festgelegt werden. Somit besteht eine vorteilhaft große Anzahl von Möglichkeiten zum verlässlichen Festlegen der Soll-Kraftdifferenzgröße.

Es wird insbesondere darauf hingewiesen, dass zum Festlegen der Soll-Kraftdifferenzgröße (aufgrund der Kombination mit einem vorzugsweise modifizierten Standard-Modulationssystem) auch eine herkömmlicherweise bereits vorhandene Hauptbremszylinder-Drucksensorik zum Ermitteln eines aktuell vorherrschenden Hauptbremszylinderdrucks zurückgegriffen werden kann. Eine aufwändige und fehlerbehaftete Schätzung des Hauptbremszylinderdrucks ist dabei nicht nötig. Dies erhöht die Reglergüte bei der Anpassung der Verstärkerkraft in dem Verfahrensschritt S3.

Bevorzugter Weise weist das Verfahren auch einen Verfahrensschritt S4 auf, in welchem ein aufgrund einer Reduzierungsvorgabe an den betriebenen Generator oder einer Deaktivierung des Generators reduziertes Generator-Bremsmoment des Generators verblendet wird. Das Verblenden erfolgt in dem Verfahrensschritt S4 durch Pumpen von Bremsflüssigkeit mittels mindestens einer Pumpe des jeweiligen Bremskreises aus dem mindestens einen Speichervolumen in mindestens einen Radbremszylinder des Bremssystems. Mittels des Verfahrensschritts S4 kann das hydraulische Bremsmoment somit so gesteigert werden, dass trotz des reduzierten Generator-Bremsmoments der Fahrerbremswunsch/das Soll-Gesamt-Bremsmoment verlässlich eingehalten wird.

In dem Verfahrensschritt S4 kann beispielsweise eine Soll-Pumpleistungsgröße der mindestens einen Pumpe des Bremssystems unter Berücksichtigung des reduzierten Generator-Bremsmoments festgelegt werden. Anschließend kann die mindestens eine Pumpe unter Berücksichtigung der festgelegten Soll-Pumpleistungsgröße angesteuert werden. Als Alternative kann die mindestens eine Pumpe auch so lange betrieben werden, bis ein vorgegebener Bremsdruck und/oder ein gewünschtes hydraulisches Bremsmoment erreicht sind.

Nach dem Verfahrensschritt S4 können erneut die Verfahrensschritte S2 und S3 ausgeführt werten. Mittels der Verfahrensschritte S2 und S3 kann die Verstärkerkraft um eine der Soll-Kraftdifferenzgröße entsprechende Ist-Kraftdifferenz so gesteigert werden, dass trotz des aufgrund der Rückförderung gesteigerten Hauptbremszylinderdrucks und der deshalb gesteigerten Hauptbremszylinder-Gegenkraft das gewünschte Kräftegleichgewicht vorliegt.

Vorteilhafterweise kann zusammen mit dem Verfahrensschritt S4 auch ein Verfahrensschritt S5 ausgeführt werden, in welchem während eines Betriebs der mindestens einen Pumpe mindestens ein Umschaltventil des Bremssystems in einen geschlossenen Zustand gesteuert wird. Auf diese Weise kann ein Rückstoß/eine Rückwirkung der Rückförderung und der dazu ausgeführten Pumpenpulsationen auf das Bremsbetätigungselement verhindert werden. Trotz des Schließens des mindestens einen Umschaltventils kann der Fahrer den Fahrerbremswunsch/das Soll-Gesamt-Bremsmoment noch erhöhen. Dies ist gewährleistet, da Volumen in diesem Fall über das Rückschlagventil des Umschaltventils in den zugeordneten Bremskreis strömen kann. Nach der erfolgten Rückförderung, d.h. nach einem Beenden des Betriebs der mindestens einen Pumpe zum Pumpen von Bremsflüssigkeit aus dem mindestens einen Speichervolumen in den mindestens einen Radbremszylinder, kann das stetig stellbare Umschaltventil langsam geöffnet werden, um eventuelle Druckdifferenzen auszugleichen (Verfahrensschritt S6). Das Ausgleichen der Druckdifferenzen kann unter zusätzlicher Berücksichtigung des fortlaufend gemessenen Hauptbremszylinderdrucks erfolgen.

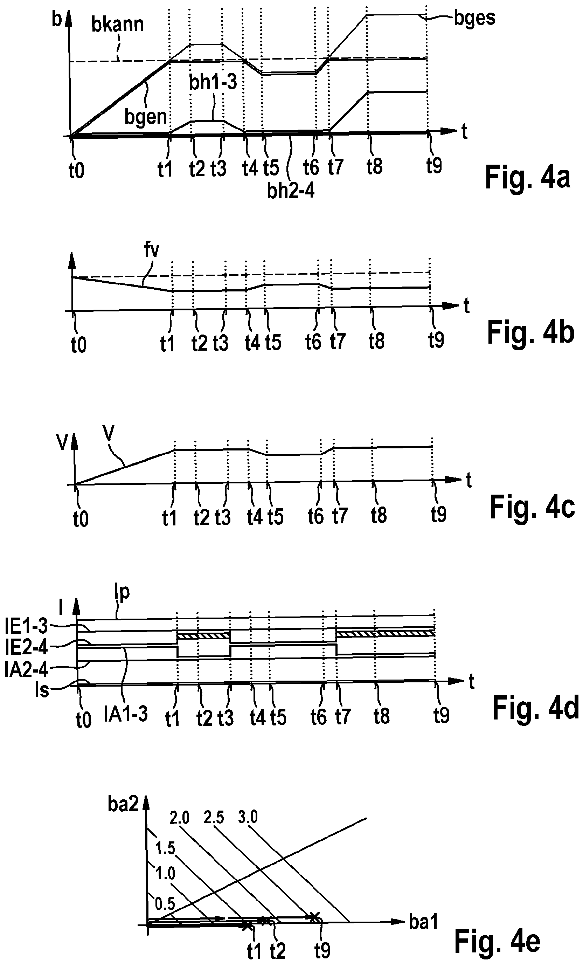

Fig. 4a bis 4e zeigen fünf Koordinatensysteme zum Darstellen einer zweiten Ausführungsform des Verfahrens zum Betreiben eines rekuperativen Bremssystems.

Der besseren Anschaulichkeit wegen wird das Verfahren unter Verwendung des oben ausgeführten rekuperativen Bremssystems beschrieben, wobei der erste Radbremszylinder und der dritte Radbremszylinder einer als Vorderachse ausgebildeten ersten Achse und der zweite Radbremszylinder und der vierte Radbremszylinder einer als Hinterachse ausgebildeten zweiten Achse zugeordnet sind. Die Ausführbarkeit des Verfahrens ist jedoch nicht auf die Verwendung des oben beschriebenen Bremssystems oder auf diese Zuordnung der Radbremszylinder limitiert.

Bei den Koordinatensystemen der Fig. 4a bis 4d ist die Abszisse die Zeitachse t. Die Ordinate des Koordinatensystems der Fig. 4a gibt ein Bremsmoment b wieder, während die Ordinate der Fig. 4b einen Zahlenwert angibt, die Ordinate der Fig. 4c einem verschobenen Bremsflüssigkeitsvolumen V entspricht und die Ordinate des Koordinatensystems der Fig. 4d eine Stromstärke I anzeigt. Die Abszisse des Koordinatensystems der Fig. 4e ist ein auf die erste Achse ausgeübtes erstes Achsenbremsmoment ba1, während die Ordinate des Koordinatensystems der Fig. 4e ein auf die zweite Achse ausgeübtes Achsenbremsmoment ba2 darstellt.

Bis zu einem Zeitpunkt t0 liegt das Bremsbetätigungselement des mittels des Verfahrens betriebenen Bremssystems in seiner Ausgangsstellung/Nicht-Betätigungstellung vor. Somit übt der Fahrer bis zum Zeitpunkt t0 keine Kraft auf das Bremsbetätigungselement auf.

Ab der Zeit t0 übt der Fahrer eine zunehmende Kraft auf das Bremsbetätigungselement aus, wodurch dieses verstellt wird. Zwischen den Zeiten t0 und t1 kann der komplette Fahrerbremswunsch rein regenerativ ausgeführt werden. Dies ist möglich, da das vom Fahrer angeforderte Soll-Gesamt-Bremsmoment bges zwischen den Zeiten t0 und t1 unter dem maximal ausführbaren Kann-Generator-Bremsmoment bkann liegt. Somit kann zwischen den Zeiten t0 und t1 das Generator-Bremsmoment bgen entsprechend dem Soll-Gesamt-Bremsmoment bges eingestellt werden.

Zum rein regenerativen Bremsen zwischen den Zeiten t0 und t1 werden die Radauslassventile geöffnet, wodurch das durch den Fahrer aus dem Hauptbremszylinder verschobene Bremsflüssigkeitsvolumen (nahezu) vollständig in die Speicherkammern (z.B. Niederdruckspeicherkammern) abgelassen wird (Verfahrensschritt S1). Das Volumen V in der mindestens einen Speicherkammer nimmt zwischen den Zeiten t0 und t1 entsprechend zu. Somit wird kein hydraulischer Bremsdruck aufgebaut und ein erstes hydraulisches Teilbremsmoment bh1-3 des ersten Radbremszylinders und des dritten Radbremszylinders und ein zweites hydraulisches Teilbremsmoment bh2-4 des zweiten Radbremszylinders und des vierten Radbremszylinders bleiben zwischen den Zeiten t0 und t1 gleich Null.

Zum oben beschriebenen Verblenden werden die vier Radeinlassventile und die vier Radauslassventile zwischen den Zeiten t0 und t1 jeweils in einen offenen Zustand gesteuert. Bei einer Ausbildung der Radeinlassventile als stromlos offene Ventile und einer Ausbildung der Radauslassventile als stromlos geschlossene Ventile erfolgt dies durch ein an das erste Radeinlassventil und das dritte Radeinlassventil ausgegebenes erstes Ventil-Steuersignal IE1-3 mit einer Stromstärke gleich Null, ein an das zweite Radeinlassventil und das vierte Radeinlassventil ausgegebenes zweites Ventil-Steuersignal IE2-4 mit einer Stromstärke gleich Null, ein an das erste Radauslassventil und das dritte Radauslassventil gesendetes drittes Ventil-Steuersignal IA1-3 mit einer Stromstärke ungleich Null (z.B. gleich Eins) und ein an das zweite Radauslassventil und das vierte Radauslassventil bereitgestelltes viertes Ventil-Steuersignal IA2-4 mit einer Stromstärke ungleich Null (z.B. gleich Eins). (Zwischen den Zeiten t0 und t1 wird das Pumpen-Steuersignal Ip und das Schließsignal Is gleich 0 gehalten.)

Zusätzlich wird zwischen den Zeiten t0 und t1 mittels eines Hauptbremszylinder-Drucksensors die Höhe des fehlenden Druckaufbaus und damit der fehlenden Hauptbremszylinder-Gegenkraft am (elektromagnetischen) Bremskraftverstärker ermittelt. Mittels der in Fig. 4b dargestellten Reduktion des Verstärkerfaktors fv kann korrespondierend zu dem in die mindestens eine Speicherkammer verschobene Volumen V ein gewünschtes Gleichgewicht zwischen der Verstärkerkraft Fv und der Hauptbremszylinder-Gegenkraft Fg beibehalten werden, wobei die Verstärkerkraft Fv zu einem Produkt aus dem Verstärkerfaktor fv und einer (nicht wiedergegebenen) Fahrerbremskraft korreliert (Verfahrensschritte S2 und S3). Somit ist trotz des zunehmenden verschobenen Volumens V ein standardgemäßes Bremsbetätigungsgefühl für den Fahrer gewährleistbar.

Zwischen den Zeiten t1 und t4 ist das vom Fahrer angeforderte Soll-Gesamt-Bremsmoment bges größer als das maximal ausführbare Kann-Generator-Bremsmoment bkann. Mittels eines Schließens des ersten Radauslassventils und des dritten Radauslassventils kann jedoch in dem ersten Radbremszylinder und in dem dritten Radbremszylinder ein erstes hydraulisches Teilbremsmoment bh1-3 ungleich Null aufgebaut werden. (Das Schließen des ersten und dritten Radauslassventils erfolgt durch ein drittes Ventil-Steuersignal IA1-3 gleich Null.) Dies ist auch so umschreibbar, dass das vom Fahrer zusätzlich verschobene Volumen bei der Erhöhung des Bremswunsches in den ersten und dritten Radbremszylinder (der Vorderachse) gebracht wird. Mittels einer Δp-Regelung (delta-p-Regelung) der (vorzugsweise stetig stellbaren) zweiten und vierten Radeinlassventile (zweites Ventil-Steuersignal IE2-4 zwischen Null und Eins) ist eine Druckregelung in jedem Bremskreis so ausführbar, dass eine Summe des ersten hydraulischen Teilbremsmoments bh1-3 und des Generator-Bremsmoments bgen dem Soll-Gesamt-Bremsmoment bges entspricht.

Der hydraulische Bremsdruck in den Vorderachs-Radbremszylindern führt auch zu einer Zunahme der Hauptbremszylinder-Gegenkraft (ungleich Null). Damit ist eine weitere Reduktion der Verstärkerkraft nicht erforderlich. Der Verstärkerfaktor fv kann somit während der Zeiten t1 bis t4 konstant gehalten werden. Man kann dies auch so umschreiben, dass mittels der Regelung der Verstärkerkraft/des Verstärkerfaktors fv dafür gesorgt wird, dass die Summe aus der Rückstellfederkraft und der Hauptbremszylinder-Gegenkraft so durch die Verstärkerkraft kompensiert wird, dass sich die zu erwartende Fahrerbremskraft für den Fahrer bei diesem Betätigungsweg ergibt.

Zum Zeitpunkt t2 erreicht der Fahrerbremswunsch/das Soll-Gesamt-Bremsmoment bges ein lokales Maximum. Ab dem Zeitpunkt t3 reduziert der Fahrer den Fahrerbremswunsch/das Soll-Gesamt-Bremsmoment bges. Zwischen den Zeiten t3 und t4 wird zuerst das erste hydraulische Teilbremsmoment bh1-3 reduziert. Dazu wird lediglich Volumen aus dem ersten Radbremszylinder und dem dritten Radbremszylinder entnommen, indem das erste Radauslassventil und das dritte Radauslassventil geöffnet werden. Das Öffnen des ersten und dritten Radauslassventils erfolgt durch ein drittes Ventil-Steuersignal IA1-3 ungleich Null (z.B. gleich Eins). Ab dem Zeitpunkt t4/ab einem ersten hydraulischen Teilbremsmoment bh1-3 gleich Null kann die Reduzierung des Soll-Gesamt-Bremsmoments bges über eine Reduzierung des Generator-Bremsmoments bgen ausgeführt werden. Dies erfolgt so lange, bis der Fahrerbremswunsch/das Soll-Gesamt-Bremsmoment bges zum Zeitpunkt t5 ein lokales Minimum erreicht.

Ab der Zeit t6 nimmt der Fahrerbremswunsch/das Soll-Gesamt-Bremsmoment bges wieder zu, und übersteigt ab dem Zeitpunkt t7 erneut das maximal ausführbare Kann-Generator-Bremsmoment bkann. (Zwischen den Zeiten t4 und t7 können die Radeinlassventile und Radauslassventile wie zwischen den Zeiten t0 und t1 angesteuert werden). Ab dem Zeitpunkt t7 werden die zwischen den Zeiten t1 und t4 ausgeführten Verfahrensschritte wiederholt. Auf eine erneute Beschreibung dieser Verfahrensschritte wird hier verzichtet.

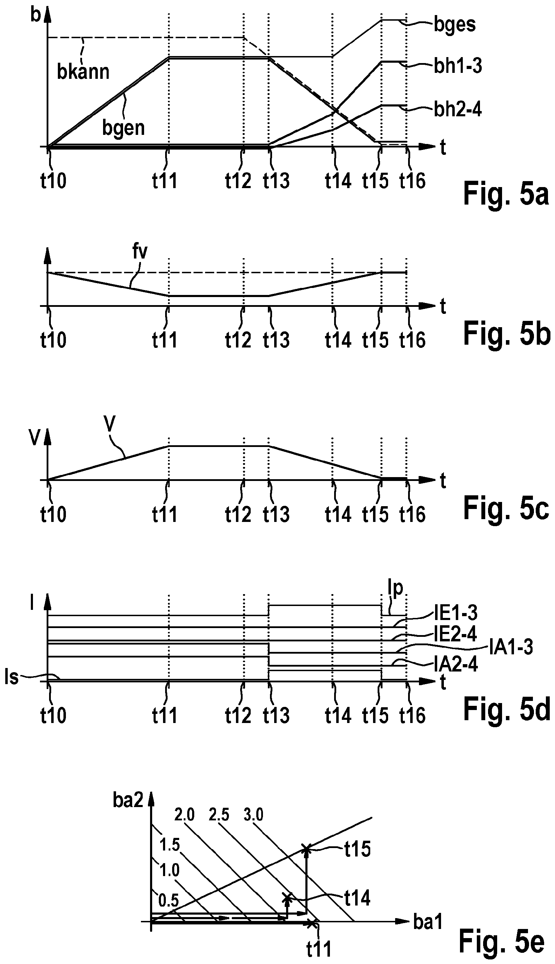

Fig. 5a bis 5e zeigen fünf Koordinatensysteme zum Darstellen einer dritten Ausführungsform des Verfahrens zum Betreiben eines rekuperativen Bremssystems. (Die Abszissen und Ordinaten der Koordinatensysteme der Fig. 5a bis 5e entsprechen den Fig. 4a bis 4e.)

Bis zu einem Zeitpunkt t10 liegt das Bremsbetätigungselement des mittels des Verfahrens betriebenen Bremssystems in seiner Ausgangsstellung/Nicht-Betätigungstellung vor. Zwischen den Zeiten t10 und t13 fordert der Fahrer ein Soll-Gesamt-Bremsmoment bges an, welches kleiner oder gleich einem maximal ausführbaren Kann-Generator-Bremsmoment bkann ist. (Das zwischen den Zeiten t10 und t13 auszuführende Soll-Gesamt-Bremsmoment bges erreicht zur Zeit t11 ein Maximum und bleibt zwischen den Zeiten t11 und t13 konstant). Der Bremswunsch des Fahrers ist somit zum Aufladen einer Fahrzeugbatterie nutzbar. Dazu werden über ein Öffnen aller vier Radeinlassventile (mittels eines ersten Ventil-Steuersignals IE1-3 gleich Null und eines zweiten Ventil-Steuersignals IE2-4 gleich Null) und ein Öffnen aller vier Radauslassventile (mittels eines dritten Ventil-Steuersignals IA1-3 ungleich Null und eines vierten Ventil-Steuersignals IA2-4 ungleich Null) das erste hydraulische Teilbremsmoment bh1-3 des ersten und dritten Radbremszylinders und das zweite hydraulische Teilbremsmoment bh2-4 des zweiten und vierten Radbremszylinders zwischen den Zeiten t10 und t13 trotz der Betätigung des Bremsbetätigungselements gleich Null gehalten (Verfahrensschritt S1). Zwischen den Zeiten t10 und t13 werden außerdem das Generator-Bremsmoment bgen gleich dem Soll-Gesamt-Bremsmoment bges eingestellt und die Verstärkerkraft/der Verstärkerfaktor fv an das in das mindestens eine Speichervolumen verschobene Volumen V angepasst (Verfahrensschritte S2 und S3). Dies gewährleistet die oben schon beschriebenen Vorteile.

Ab der Zeit t12 nimmt das maximal ausführbare Kann-Generator-Bremsmoment bkann ab, beispielsweise aufgrund eines Aufladezustands der Fahrzeugbatterie und/oder einer Reduzierung der aktuellen Geschwindigkeit des Fahrzeugs unter eine Generator-Einsetz-Mindestgeschwindigkeit. Nach der Zeit t13 ist das maximal ausführbare Kann-Generator-Bremsmoment bkann kleiner als der Fahrerbremswunsch/das Soll-Gesamt-Bremsmoment bges. Über das Aufbauen eines Bremsdrucks in den Radbremszylindern kann der Fahrerbremswunsch trotzdem verlässlich eingehalten werden. Dazu werden alle vier Radauslassventile mittels eines dritten Ventil-Steuersignals IA1-3 gleich Null und eines vierten Ventil-Steuersignals IA2-4 gleich Null ab der Zeit t13 geschlossen. Mittels eines Pumpen-Steuersignals Ip ungleich Null kann die mindestens eine Pumpe des Bremssystems ab der Zeit t13 so aktiviert werden, dass Bremsflüssigkeit aus dem Speichervolumen in die Radbremszylinder gepumpt wird (Verfahrensschritt S4). Das in dem Speichervolumen vorhandene Volumen V nimmt deshalb ab der Zeit t13 ab. Auf diese Weise ist sowohl an der Vorder- als auch an der Hinterachse ein hydraulisches Bremsmoment so aufbaubar, dass das Soll-Gesamt-Bremsmoment bges verlässlich eingehalten wird.

Um durch die Rückförderung bedingte spürbare Pumpenpulsationen am Bremsbetätigungselement zu vermeiden, wird das mindestens eine Umschaltventil mittels eines Schließsignals Is für die Zeit der Rückförderung geschlossen (Verfahrensschritt S5). Sofern das mindestens eine Umschaltventil als stromlos offenes Ventil ausgebildet ist, erfolgt dies durch ein Schließsignal Is ungleich Null.

Trotz des Schließens des mindestens einen Umschaltventils während der Rückförderung/des Betriebs der mindestens einen Pumpe, kann der Fahrer ab dem Zeitpunkt t14 das Soll-Gesamt-Bremsmoment noch erhöhen. Volumen strömt in diesem Fall über das Rückschlagventil des Umschaltventils in den Bremskreis. Es wird darauf hingewiesen, dass mittels des Betriebs der Pumpe auch nach der Zeit t14 das gesteigerte Soll-Gesamt-Bremsmoment bges noch durch eine Steigerung der hydraulischen Teilbremsmomente bh1-3 und bh2-4 ausführbar ist, obwohl das maximal ausführbare Kann-Generator-Bremsmoment bkann fortlaufend abnimmt und zur Zeit t15 gleich 0 wird.

Auch während der Steigerung der hydraulischen Teilbremsmoment bh1-3 und bh2-4 zwischen den Zeiten t13 und t15 wird die Verstärkerkraft/der Verstärkerfaktor fv an die Rückförderung des in das mindestens eine Speichervolumen verschobenen Volumens V angepasst (Verfahrensschritte S2 und S3).

Zur Zeit t15 ist die Rückförderung beendet. Das (vorteilhafterweise als stetig stellbares Ventil ausgebildete) mindestens eine Umschaltventil kann langsam geöffnet werden, um eventuelle Druckdifferenzen auszugleichen (Verfahrensschritt S6). Nach der abgeschlossenen Rückförderung des Volumens V aus dem mindestens einen Speichervolumen zurück in den mindestens einen Bremskreis wird ausschließlich hydraulisch gebremst. Der Verstärkungsfaktor fv des Bremskraftverstärkers ist wieder am konventionellen Ausgangswert angelangt.

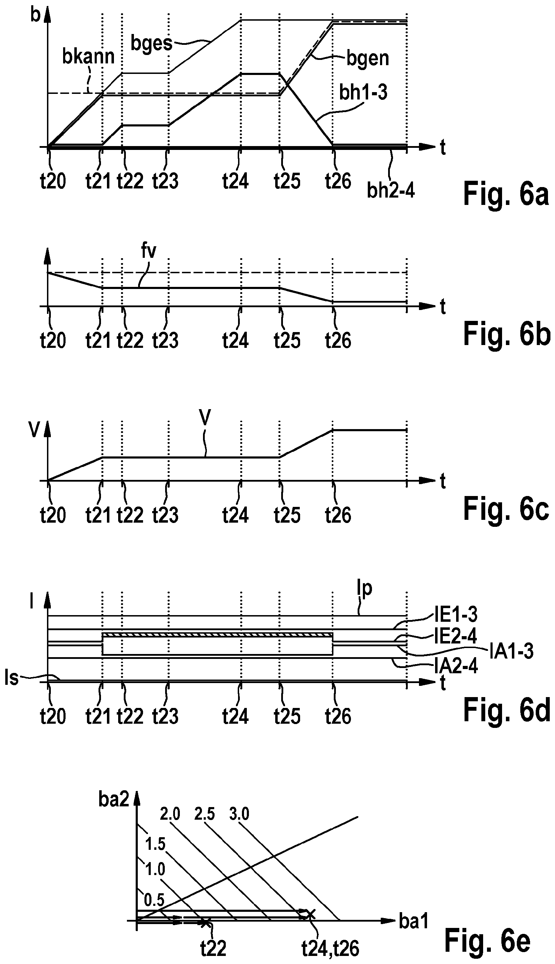

Fig. 6a bis 6e zeigen fünf Koordinatensysteme zum Darstellen einer vierten Ausführungsform des Verfahrens zum Betreiben eines rekuperativen Bremssystems. (Die Abszissen und Ordinaten der Koordinatensysteme der Fig. 6a bis 6e entsprechen den Fig. 4a bis 4e.)

Bis zu einem Zeitpunkt t20 liegt das Bremsbetätigungselement des mittels des Verfahrens betriebenen Bremssystems in seiner Ausgangsstellung/Nicht-Betätigungstellung vor. Ab der Zeit t20 übt der Fahrer eine zunehmende Kraft auf das Bremsbetätigungselement aus. Zwischen den Zeiten t20 und t21 kann auf die oben schon beschriebene Weise rein regenerativ gebremst werden (Verfahrensschritt S1). Ab der Zeit t21 wird aufgrund eines vom Fahrer angeforderten Soll-Gesamt-Bremsmoments bges größer als dem maximal ausführbaren Kann-Generator-Bremsmoment bkann mittels eines Schließens des ersten und dritten Radauslassventils ein erstes hydraulisches Teilbremsmoment bh1-3 ungleich Null in dem ersten und dritten Radbremszylinder aufgebaut. Die zusätzliche Volumenverschiebung durch den Fahrer mittels der Betätigung des Bremsbetätigungselements kann zu einem gewünschten hydraulischen Bremsmomentaufbau an der Vorderachse genutzt werden. Gleichzeitig kann über ein Offenhalten des zweiten und vierten Radauslassventils sichergestellt werden, dass kein Bremsdruckaufbau in den Radbremszylindern der Hinterachse erfolgt. Insbesondere kann mittels eines geeigneten Ansteuerns (Δp-Regelung, delta-p-Regelung) der (vorzugsweise stetig stellbaren) zweiten und vierten Radeinlassventile der Bremsdruck in dem mindestens einen Bremskreis auf einen gewünschten Wert eingesteuert werden. Außerdem wird der Verstärkerfaktor fv so angepasst, dass trotz des in das mindestens eine Speichervolumen verschobenen Volumens V das gewünschte Kräftegleichgewicht vorliegt (Verfahrensschritte S2 und S3).

Bei der Ausführungsform der Fig. 6a bis 6e nimmt das maximal ausführbare Kann-Generator-Bremsmoment bkann während eines Bremsvorgangs zum Zeitpunkt t25 zu. Dies kann für eine Steigerung des Generator-Bremsmoments bgen zum schneller Aufladen der Fahrzeugbatterie genutzt werden. Ab der Zeit t25 kann mittels der Δp-Regelung (delta-p-Regelung) des zweiten und vierten Radeinlassventils und eines gleichzeitigen Offenhalten des zweiten und vierten Radauslassventils Bremsflüssigkeit in das mindestens eine Speichervolumen strömen, so dass das darin vorliegende Volumen V ab der Zeit t25 zunimmt. Gleichzeitig kann das zweite hydraulische Teilbremsmoment bh2-4 des zweiten und vierten Radbremszylinders (nahezu) gleich Null gehalten werden. Ebenso kann das hydraulische Teilbremsmoment bh1-3 des ersten und dritten Radbremszylinders zwischen den Zeiten t25 und t26 so reduziert werden, dass das Generator-Bremsmoment bgen entsprechend der Zunahme des maximal ausführbaren Kann-Generator-Bremsmoment bkann steigerbar ist und gleichzeitig der Fahrerbremswunsch verlässlich eingehalten wird.

Die Verstärkerkraft/der Verstärkerfaktor fv des Bremskraftverstärkers wird auch in dieser Betriebssituation in Abhängigkeit des aktuellen Bremsbetätigungswegs/der aktuellen Fahrerbremskraft und des tatsächlich vorliegenden Hauptbremszylinderdrucks angepasst. Sollte während dieser Phase ein Pumpen vorteilhaft sein um ein zusätzliches Volumen in den ersten und dritten Radbremszylinder zu verschieben, so kann für die Zeit der Pumpenansteuerung das mindestens eine Umschaltventil geschlossen und danach langsam geöffnet werden. (Dies ist in Fig. 6d jedoch nicht dargestellt.) Nach einem kompletten Verschieben von Bremsflüssigkeit aus dem ersten und dritten Radbremszylinder über das zweite und vierte Radeinlassventil in das mindestens eine Speichervolumen kann rein regenerativ gebremst werden.

## Patentansprüche

1. Verfahren zum Betreiben eines rekuperativen Bremssystems eines Fahrzeugs mit den Schritten:
Ansteuern mindestens eines Ventils (70a, 70b, 78a, 78b, 79a, 79b) eines Bremskreises (50, 52) des Bremssystems vor und/oder während eines Betriebs eines Generators des Bremssystems derart, dass Bremsflüssigkeit über das zumindest teilgeöffnete mindestens eine Ventil (70a, 70b, 78a, 78b, 79a, 79b) aus einem Hauptbremszylinder (62) des Bremssystems und/oder dem Bremskreis (50, 52) in mindestens eine zwischen Radauslassventilen (78a, 78b, 79a, 79b) des Bremskreises (50, 52) und mindestens einer Pumpe (80a, 80b) des Bremskreises (50, 52) angeordnete Niederdruckspeicherkammer (82a, 82b) des Bremskreises (50, 52) verschoben wird (S1);
**gekennzeichnet durch** die Schritte:
Festlegen einer Soll-Kraftdifferenzgröße bezüglich einer von einem Bremskraftverstärker (68) ausgeübten Verstärkerkraft (Fv) unter Berücksichtigung einer Generator-Bremsmoment-Information (14) bezüglich eines von dem Generator ausgeübten Generator-Bremsmoments (bgen), einer gemessenen oder geschätzten Hauptbremszylinder-Druckgröße (16) und/oder einer von zumindest der Generator-Bremsmoment-Information (14) oder der Hauptbremszylinder-Druckgröße (16) abgeleiteten Auswertegröße (S2); und
Ansteuern des Bremskraftverstärkers (68) unter Berücksichtigung der festgelegten Soll-Kraftdifferenzgröße so, dass die Verstärkerkraft (Fv) um eine der Soll-Kraftdifferenzgröße entsprechende Ist-Kraftdifferenz variiert wird (S3).

2. Verfahren nach Anspruch 1, wobei mindestens ein Radauslassventil (78a, 78b, 79a, 79b) als das mindestens eine Ventil (78a, 78b, 79a, 79b) zumindest teilweise so geöffnet wird, dass Bremsflüssigkeit über das zumindest teilgeöffnete mindestens eine Radauslassventil (78a, 78b, 79a, 79b) in die mindestens eine Niederdruckspeicherkammer (82a, 82b) verschoben wird.

3. Verfahren nach Anspruch 1, wobei mindestens ein Hochdruckschaltventil (70a, 70b) als das mindestens eine Ventil (78a, 78b, 79a, 79b) zumindest teilweise so geöffnet wird, dass Bremsflüssigkeit über das zumindest teilgeöffnete mindestens eine Hochdruckschaltventil (70a, 70b) und mindestens eine Rückschlagventil-freie Leitungseinrichtung zwischen dem jeweiligen Hochdruckschaltventil (70a, 70b) und der zugeordneten Niederdruckspeicherkammer (82a, 82b) in die mindestens eine Niederdruckspeicherkammer (82a, 82b) verschoben wird.

4. Verfahren nach einem der vorhergehenden Ansprüche, wobei bei einer Reduzierung des mittels des Generators ausgeübten Generator-Bremsmoments (bgen) und/oder einer Deaktivierung des Generators Bremsflüssigkeit mittels der mindestens einen Pumpe (80a, 80b) des Bremskreises (50, 52) aus der mindestens einen Niederdruckspeicherkammer (82a, 82b) in mindestens einen der Radbremszylinder (53a, 53b, 54a, 54b) des Bremssystems gepumpt wird (S4).

5. Verfahren nach Anspruch 4, wobei während eines Betriebs der mindestens einen Pumpe (80a, 80b) zum Pumpen von Bremsflüssigkeit aus der mindestens einen Niederdruckspeicherkammer (82a, 82b) in den mindestens einen Radbremszylinder (53a, 53b, 54a, 54b) mindestens ein Umschaltventil (72a, 72b) des Bremssystems in einen geschlossenen Zustand gesteuert wird (S5).

6. Verfahren nach Anspruch 5, wobei das mindestens eine Umschaltventil (72a, 72b) nach einem Beenden des Betriebs der mindestens einen Pumpe (80a, 80b) zum Pumpen von Bremsflüssigkeit aus der mindestens einen Niederdruckspeicherkammer (82a, 82b) in den mindestens einen Radbremszylinder (53a, 53b, 54a, 54b) langsam in einen zumindest teilgeöffneten Zustand gesteuert wird (S6).

7. Rekuperatives Bremssystem für ein Fahrzeug mit:
einem Hauptbremszylinder (62);
einem Bremskreis (50, 52) mit mindestens einem Ventil (70a, 70b, 78a, 78b, 79a, 79b), Radauslassventilen (78a, 78b, 79a, 79b), mindestens einer Pumpe (80a, 80b) und mindestens einer zwischen den Radauslassventilen (78a, 78b, 79a, 79b) und der mindestens einen Pumpe (80a, 80b) angeordneten Niederdruckspeicherkammer (82a, 82b); und
einer Steuervorrichtung (100) mit einer Ansteuereinrichtung (10), mittels welcher das mindestens eine Ventil (70a, 70b, 78a, 78b, 79a, 79b) vor und/oder während eines Betriebs eines Generators des Bremssystems derart in einen zumindest teilgeöffneten Zustand steuerbar ist, dass Bremsflüssigkeit über das zumindest teilgeöffnete mindestens eine Ventil (70a, 70b, 78a, 78b, 79a, 79b) aus dem Hauptbremszylinder (62) und/oder dem Bremskreis (50, 52) in die mindestens eine Niederdruckspeicherkammer (82a, 82b) verschiebbar ist;
**dadurch gekennzeichnet, dass**
die Ansteuereinrichtung (10) zusätzlich dazu ausgelegt ist, unter Berücksichtigung einer Generator-Bremsmoment-Information (14) bezüglich eines von dem Generator ausgeübten oder auszuübenden Generator-Bremsmoments (bgen), einer bereitgestellten gemessenen oder geschätzten Hauptbremszylinder-Druckgröße (16) und/oder einer von zumindest der Generator-Bremsmoment-Information (14) oder der Hauptbremszylinder-Druckgröße (16) abgeleiteten Auswertegröße eine Soll-Kraftdifferenzgröße bezüglich einer von einem Bremskraftverstärker (68) des Bremssystems ausübbaren Verstärkerkraft (Fv) festzulegen, und unter Berücksichtigung der festgelegten Soll-Kraftdifferenzgröße mindestens ein Bremskraftverstärker-Steuersignal (20) an den Bremskraftverstärker (68) auszugeben, welcher mittels des Bremskraftverstärker-Steuersignals (20) so ansteuerbar ist, dass die Verstärkerkraft (Fv) um eine der Soll-Kraftdifferenzgröße entsprechende Ist-Kraftdifferenz variierbar ist.

8. Rekuperatives Bremssystem nach Anspruch 7, wobei mittels der Ansteuereinrichtung (10) mindestens ein Radauslassventil (78a, 78b, 79a, 79b) als das mindestens eine Ventil (78a, 78b, 79a, 79b) so in den zumindest teilgeöffneten Zustand steuerbar ist, dass Bremsflüssigkeit über das zumindest teilgeöffnete mindestens eine Radauslassventil (78a, 78b, 79a, 79b) in die mindestens eine Niederdruckspeicherkammer (82a, 82b) verschiebbar ist.

9. Rekuperatives Bremssystem nach Anspruch 7, wobei mittels der Ansteuereinrichtung (10) mindestens ein Hochdruckschaltventil (70a, 70b) als das mindestens eine Ventil (78a, 78b, 79a, 79b) so in den zumindest teilgeöffneten Zustand steuerbar ist, dass Bremsflüssigkeit über das zumindest teilgeöffnete mindestens eine Hochdruckschaltventil (70a, 70b) und mindestens eine Rückschlagventil-freie Leitungseinrichtung zwischen dem jeweiligen Hochdruckschaltventil (70a, 70b) und der zugeordneten Niederdruckspeicherkammer (82a, 82b) in die mindestens eine Niederdruckspeicherkammer (82a, 82b) verschiebbar ist.

10. Rekuperatives Bremssystem nach einem der Ansprüche 7 bis 9, wobei mittels der Ansteuereinrichtung (10) bei einer Reduzierung des mittels des Generators (68) ausgeübten Generator-Bremsmoments (bgen) und/oder einer Deaktivierung des Generators (68) die mindestens eine Pumpe (80a, 80b) des Bremskreises (50, 52) so ansteuerbar ist, dass Bremsflüssigkeit mittels der mindestens einen Pumpe (80a, 80b) aus der mindestens einen Niederdruckspeicherkammer (82a, 82b) in mindestens einen der Radbremszylinder (53a, 53b, 54a, 54b) des Bremssystems pumpbar ist.

11. Rekuperatives Bremssystem nach Anspruch 10, wobei die Ansteuereinrichtung (10) während eines Betriebs der mindestens einen Pumpe (80a, 80b) zum Pumpen von Bremsflüssigkeit aus der mindestens einen Niederdruckspeicherkammer (82a, 82b) in den mindestens einen Radbremszylinder (53a, 53b, 54a, 54b) zusätzlich dazu ausgelegt ist, mindestens ein Schließsignal (24, Is) an mindestens ein Umschaltventil (72a, 72b) des Bremskreises (50, 52) auszugeben, mittels welchem das mindestens eine Umschaltventil (72a, 72b) in einen geschlossenen Zustand steuerbar ist.

12. Rekuperatives Bremssystem nach Anspruch 11, wobei die Ansteuereinrichtung (10) nach einem Beenden des Betriebs der mindestens einen Pumpe (80a, 80b) zum Pumpen von Bremsflüssigkeit aus der mindestens einen Niederdruckspeicherkammer (82a, 82b) in den mindestens einen Radbremszylinder (53a, 53b, 54a, 54b) dazu ausgelegt ist, das mindestens eine Umschaltventil (72a, 72b) langsam in einen zumindest teilgeöffneten Zustand zu steuern.

## Claims

1. Method for operating a recuperative brake system of a vehicle, having the steps:
actuating at least one valve (70a, 70b, 78a, 78b, 79a, 79b) of a brake circuit (50, 52) of the brake system before and/or during an operation of a generator of the brake system in such a way that brake fluid is moved (S1) from a master brake cylinder (62) of the brake system and/or the brake circuit (50, 52) via the at least partially opened at least one valve (70a, 70b, 78a, 78b, 79a, 79b) into at least one low-pressure storage chamber (82a, 82b), arranged between wheel outlet valves (78a, 78b, 79a, 79b) of the brake circuit (50, 52) and at least one pump (80a, 80b) of the brake circuit (50, 52), of the brake circuit (50, 52);
**characterized by** the steps:
defining a target force differential variable relating to a booster force (Fv), applied by a brake booster (68), taking into account a generator braking torque information item (14) relating to a generator braking torque (bgen) applied by the generator, a measured or estimated master brake cylinder pressure variable (16) and/or an evaluation variable (S2) derived from at least the generator braking torque information item (14) or the master brake cylinder pressure variable (16); and
actuating the brake booster (68) taking into account the defined target force differential variable in such a way that the booster force (Fv) is varied (S3) by an actual force difference corresponding to the target force differential variable.

2. Method according to Claim 1, wherein at least one wheel outlet valve (78a, 78b, 79a, 79b) is at least partially opened as the at least one valve (78a, 78b, 79a, 79b) in such a way that brake fluid is moved via the at least partially opened at least one wheel outlet valve (78a, 78b, 79a, 79b) into the at least one low-pressure storage chamber (82a, 82b).

3. Method according to Claim 1, wherein at least one high-pressure switching valve (70a, 70b) is at least partially opened as the at least one valve (78a, 78b, 79a, 79b) in such a way that brake fluid is moved via the at least partially opened at least one high-pressure switching valve (70a, 70b) and at least one non-return-valve-free line device between the respective high-pressure switching valve (70a, 70b) and the assigned low-pressure storage chamber (82a, 82b) into the at least one low-pressure storage chamber (82a, 82b).

4. Method according to one of the preceding claims, wherein when the generator braking torque (bgen) applied by means of the generator is reduced and/or the generator is deactivated, brake fluid is pumped (S4) from the at least one low-pressure storage chamber (82a, 82b) into at least one of the wheel brake cylinders (53a, 53b, 54a, 54b) of the brake system by means of the at least one pump (80a, 80b) of the brake circuit (50, 52).

5. Method according to Claim 4, wherein during an operation of the at least one pump (80a, 80b) for pumping brake fluid from the at least one low-pressure storage chamber (82a, 82b) into the at least one wheel brake cylinder (53a, 53b, 54a, 54b) at least one switch-over valve (72a, 72b) of the brake system is controlled (S5) into a closed state.

6. Method according to Claim 5, wherein, after the ending of the operation of the at least one pump (80a, 80b) for pumping brake fluid from the at least one low-pressure storage chamber (82a, 82b) into the at least one wheel brake cylinder (53a, 53b, 54a, 54b), the at least one switch-over valve (72a, 72b) is controlled (S6) slowly into an at least partially opened state.

7. Recuperative brake system for a vehicle having:
a master brake cylinder (62);
a brake circuit (50, 52) with at least one valve (70a, 70b, 78a, 78b, 79a, 79b), wheel outlet valves (78a, 78b, 79a, 79b), at least one pump (80a, 80b) and at least one low-pressure storage chamber (82a, 82b) which is arranged between the wheel outlet valves (78a, 78b, 79a, 79b) and the at least one pump (80a, 80b); and
a control device (100) with an actuation device (10), by means of which the at least one valve (70a, 70b, 78a, 78b, 79a, 79b) can be controlled before and/or during an operation of a generator of the brake system into an at least partially opened state in such a way that brake fluid can be moved from the master brake cylinder (62) and/or the brake circuit (50, 52) via the at least partially opened at least one valve (70a, 70b, 78a, 78b, 79a, 79b) into the at least one low-pressure storage chamber (82a, 82b);
**characterized in that**
the actuation device (10) is additionally configured to define a target force differential variable relating to a booster force (Fv), which can be applied by a brake booster (68) of the brake system, taking into account a generator braking torque information item (14) relating to a generator braking torque (bgen) which is applied or is to be applied by the generator, a supplied measure dor estimated master brake cylinder pressure variable (16) and/or an evaluation variable which is derived from at least the generator braking torque information item (14) or the master brake cylinder pressure variable (16), and to apply at least one brake booster control signal (20) to the brake booster (68) taking into account the defined target force differential variable, which brake booster (68) can be actuated by means of the brake booster control signal (20) in such a way that the booster force (Fv) can be varied by an actual force difference corresponding to the target force differential variable.

8. Recuperative brake system according to Claim 7, wherein at least one wheel outlet valve (78a, 78b, 79a, 79b) can be controlled as the at least one valve (78a, 78b, 79a, 79b) into the at least partially opened state by means of the actuation device (10), in such a way that brake fluid can be moved via the at least partially opened at least one wheel outlet valve (78a, 78b, 79a, 79b) into the at least one low-pressure storage chamber (82a, 82b).

9. Recuperative brake system according to Claim 7, wherein at least one high-pressure switching valve (70a, 70b) can be controlled as the at least one valve (78a, 78b, 79a, 79b) into the at least partially opened state by means of the actuation device (10) in such a way that brake fluid can be moved via the at least partially opened at least one high-pressure switching valve (70a, 70b) and at least one non-return-valve-free line device between the respective high-pressure switching valve (70a, 70b) and the assigned low-pressure storage chamber (82a, 82b) into the at least one low-pressure storage chamber (82a, 82b).

10. Recuperative brake system according to one of Claims 7 to 9, wherein when the generator braking torque (bgen) which is applied by means of the generator (68) is reduced and/or the generator (68) is deactivated, the at least one pump (80a, 80b) of the brake circuit (50, 52) can be actuated by means of the actuation device (10) in such a way that brake fluid can be pumped from the at least one low-pressure storage chamber (82a, 82b) into at least one of the wheel brake cylinders (53a, 53b, 54a, 54b) of the brake system by means of the at least one pump (80a, 80b).

11. Recuperative brake system according to Claim 10, wherein during an operation of the at least one pump (80a, 80b) for pumping brake fluid from the at least one low-pressure storage chamber (82a, 82b) into the at least one wheel brake cylinder (53a, 53b, 54a, 54b) the actuation device (10) is additionally configured to output at least one closing signal (24, Is) to at least one switch-over valve (72a, 72b) of the brake circuit (50, 52), by means of which closing signal (24, Is) the at least one switch-over valve (72a, 72b) can be controlled into a closed state.

12. Recuperative brake system according to Claim 11, wherein, after the ending of the operation of the at least one pump (80a, 80b) for pumping brake fluid from the at least one low-pressure storage chamber (82a, 82b) into the at least one wheel brake cylinder (53a, 53b, 54a, 54b), the actuation device (10) is configured to control the at least one switch-over valve (72a, 72b) slowly into an at least partially opened state.

## Revendications

1. Procédé permettant de faire fonctionner un système de freinage à récupération d'un véhicule, le procédé comprenant les étapes consistant à :
commander au moins une soupape (70a, 70b, 78a, 78b, 79a, 79b) d'un circuit de freinage (50, 52) du système de freinage avant et/ou pendant un fonctionnement d'un générateur du système de freinage de telle sorte que du liquide de frein soit déplacé, par le biais de ladite au moins une soupape (70a, 70b, 78a, 78b, 79a, 79b) au moins partiellement ouverte, à partir d'un maître-cylindre de frein (62) du système de freinage et/ou à partir du circuit de freinage (50, 52) dans au moins une chambre d'accumulation basse pression (82a, 82b) du circuit de freinage (50, 52), laquelle est disposée entre des soupapes de sortie de roue (78a, 78b, 79a, 79b) du circuit de freinage (50, 52) et au moins une pompe (80a, 80b) du circuit de freinage (50, 52) (S1) ;
**caractérisé par** les étapes consistant à :
fixer une grandeur de différence de force de consigne relative à une force d'amplification (Fv) exercée par un servofrein (68) en prenant en compte une information de couple de freinage de générateur (14) relative à un couple de freinage de générateur (bgen) exercé par le générateur, une grandeur de pression de maître-cylindre de frein (16) mesurée ou estimée et/ou une grandeur d'évaluation dérivée d'au moins l'information de couple de freinage de générateur (14) ou de la grandeur de pression de maître-cylindre de frein (16) (S2) ; et
commander le servofrein (68) en prenant en compte la grandeur de différence de force de consigne fixée de telle sorte que la force d'amplification (Fv) soit modifiée d'une différence de force réelle correspondant à la grandeur de différence de force de consigne (S3).

2. Procédé selon la revendication 1, dans lequel au moins une soupape de sortie de roue (78a, 78b, 79a, 79b) en tant qu'au moins une soupape (78a, 78b, 79a, 79b) est ouverte au moins partiellement de telle sorte que du liquide de frein soit déplacé, par le biais de ladite au moins une soupape de sortie de roue (78a, 78b, 79a, 79b) au moins partiellement ouverte, dans ladite au moins une chambre d'accumulation basse pression (82a, 82b).

3. Procédé selon la revendication 1, dans lequel au moins une soupape de commutation haute pression (70a, 70b) en tant qu'au moins une soupape (78a, 78b, 79a, 79b) est ouverte au moins partiellement de telle sorte que du liquide de frein soit déplacé, par le biais de ladite au moins une soupape de commutation haute pression (70a, 70b) au moins partiellement ouverte et d'au moins un moyen formant conduite dépourvu de soupapes anti-retour entre la soupape de commutation haute pression (70a, 70b) respective et la chambre d'accumulation basse pression (82a, 82b) associée, dans ladite au moins une chambre d'accumulation basse pression (82a, 82b) .

4. Procédé selon l'une quelconque des revendications précédentes, dans lequel, lors d'une réduction du couple de freinage de générateur (bgen) exercé au moyen du générateur et/ou lors d'une désactivation du générateur, du liquide de frein est pompé au moyen de ladite au moins une pompe (80a, 80b) du circuit de freinage (50, 52) à partir de ladite au moins une chambre d'accumulation basse pression (82a, 82b) dans au moins l'un des cylindres de frein de roue (53a, 53b, 54a, 54b) du système de freinage (S4) .

5. Procédé selon la revendication 4, dans lequel, pendant un fonctionnement de ladite au moins une pompe (80a, 80b) pour pomper du liquide de frein à partir de ladite au moins une chambre d'accumulation basse pression (82a, 82b) dans ledit au moins un cylindre de frein de roue (53a, 53b, 54a, 54b), au moins une soupape d'inversion (72a, 72b) du système de freinage est commandée dans un état fermé (S5).

6. Procédé selon la revendication 5, dans lequel ladite au moins une soupape d'inversion (72a, 72b) est, après l'achèvement du fonctionnement de ladite au moins une pompe (80a, 80b) pour pomper du liquide de frein à partir de ladite au moins une chambre d'accumulation basse pression (82a, 82b) dans ledit au moins un cylindre de frein de roue (53a, 53b, 54a, 54b), commandée lentement dans un état au moins partiellement ouvert (S6).

7. Système de freinage à récupération pour un véhicule comprenant :
un maître-cylindre de frein (62) ;
un circuit de freinage (50, 52) comprenant au moins une soupape (70a, 70b, 78a, 78b, 79a, 79b), des soupapes de sortie de roue (78a, 78b, 79a, 79b), au moins une pompe (80a, 80b) et au moins une chambre d'accumulation basse pression (82a, 82b) disposée entre les soupapes de sortie de roue (78a, 78b, 79a, 79b) et ladite au moins une pompe (80a, 80b) ; et
un dispositif de commande (100) comprenant un moyen de commande (10) au moyen duquel ladite au moins une soupape (70a, 70b, 78a, 78b, 79a, 79b) peut être commandée dans un état au moins partiellement ouvert avant et/ou pendant un fonctionnement d'un générateur du système de freinage de telle sorte que du liquide de frein puisse être déplacé, par le biais de ladite au moins une soupape (70a, 70b, 78a, 78b, 79a, 79b) au moins partiellement ouverte, à partir du maître-cylindre de frein (62) et/ou du circuit de freinage (50, 52) dans ladite au moins une chambre d'accumulation basse pression (82a, 82b) ,
**caractérisé en ce que**
le moyen de commande (10) est en outre conçu pour, en prenant en compte une information de couple de freinage de générateur (14) relative à un couple de freinage de générateur (bgen) exercé ou devant être exercé par le générateur, une grandeur de pression de maître-cylindre de frein (16) mesurée ou estimée fournie et/ou une grandeur d'évaluation dérivée d'au moins l'information de couple de freinage de générateur (14) ou de la grandeur de pression de maître-cylindre de frein (16), fixer une grandeur de différence de force de consigne relative à une force d'amplification (Fv) pouvant être exercée par un servofrein (68) du système de freinage et pour, en prenant en compte la grandeur de différence de force de consigne fixée, délivrer au moins un signal de commande de servofrein (20) au servofrein (68), lequel peut être commandé au moyen du signal de commande de servofrein (20) de telle sorte que la force d'amplification (Fv) puisse être modifiée d'une différence de force réelle correspondant à la grandeur de différence de force de consigne.

8. Système de freinage à récupération selon la revendication 7, dans lequel, grâce au moyen de commande (10), au moins une soupape de sortie de roue (78a, 78b, 79a, 79b) en tant qu'au moins une soupape (78a, 78b, 79a, 79b) peut être commandée dans l'état au moins partiellement ouvert de telle sorte que du liquide de frein puisse être déplacé, par le biais de ladite au moins une soupape de sortie de roue (78a, 78b, 79a, 79b) au moins partiellement ouverte, dans ladite au moins une chambre d'accumulation basse pression (82a, 82b).

9. Système de freinage à récupération selon la revendication 7, dans lequel, grâce au moyen de commande (10), au moins une soupape de commutation haute pression (70a, 70b) en tant qu'au moins une soupape (78a, 78b, 79a, 79b) peut être commandée dans l'état au moins partiellement ouvert de telle sorte que du liquide de frein puisse être déplacé, par le biais de ladite au moins une soupape de commutation haute pression (70a, 70b) au moins partiellement ouverte et d'au moins un moyen formant conduite dépourvu de soupapes anti-retour entre la soupape de commutation haute pression (70a, 70b) respective et la chambre d'accumulation basse pression (82a, 82b) associée, dans ladite au moins une chambre d'accumulation basse pression (82a, 82b) .

10. Système de freinage à récupération selon l'une quelconque des revendications 7 à 9, dans lequel, grâce au moyen de commande (10), lors d'une réduction du couple de freinage de générateur (bgen) exercé au moyen du générateur (68) et/ou lors d'une désactivation du générateur (68), ladite au moins une pompe (80a, 80b) du circuit de freinage (50, 52) peut être commandée de telle sorte que du liquide de frein puisse être pompé au moyen de ladite au moins une pompe (80a, 80b) à partir de ladite au moins une chambre d'accumulation basse pression (82a, 82b) dans au moins l'un des cylindres de frein de roue (53a, 53b, 54a, 54b) du système de freinage.

11. Système de freinage à récupération selon la revendication 10, dans lequel le moyen de commande (10) est en outre conçu pour, pendant un fonctionnement de ladite au moins une pompe (80a, 80b) pour pomper du liquide de frein à partir de ladite au moins une chambre d'accumulation basse pression (82a, 82b) dans ledit au moins un cylindre de frein de roue (53a, 53b, 54a, 54b), délivrer au moins un signal de fermeture (24, Is) à au moins une soupape d'inversion (72a, 72b) du circuit de freinage (50, 52), signal de fermeture au moyen duquel ladite au moins une soupape d'inversion (72a, 72b) peut être commandée dans un état fermé.

12. Système de freinage à récupération selon la revendication 11, dans lequel le moyen de commande (10) est conçu pour, après l'achèvement du fonctionnement de ladite au moins une pompe (80a, 80b) pour pomper du liquide de frein à partir de ladite au moins une chambre d'accumulation basse pression (82a, 82b) dans ledit au moins un cylindre de frein de roue (53a, 53b, 54a, 54b), commander ladite au moins une soupape d'inversion (72a, 72b) lentement dans un état au moins partiellement ouvert.
